(19) Europäisches Patentamt
European Patent Office
Office européen des brevets

(11) Publication number: **0 209 360 B1**

(12) **EUROPEAN PATENT SPECIFICATION**

(45) Date of publication of patent specification: **27.01.93** (51) Int. Cl.⁵: **C08L 83/16**, C08G 77/60

(21) Application number: **86305444.1**

(22) Date of filing: **15.07.86**

(54) **Method for converting organosilicon polymers containing Si-H units to new and useful preceramic polymers and ceramic materials.**

(30) Priority: **18.07.85 US 756353**
**30.09.85 US 781934**

(43) Date of publication of application:
**21.01.87 Bulletin 87/04**

(45) Publication of the grant of the patent:
**27.01.93 Bulletin 93/04**

(84) Designated Contracting States:
**DE FR GB IT NL**

(56) References cited:
**EP-A- 0 152 704**
**US-A- 4 482 669**
**US-A- 4 482 689**
**US-A- 4 535 007**

(73) Proprietor: **MASSACHUSETTS INSTITUTE OF TECHNOLOGY**
**77 Massachusetts Avenue**
**Cambridge, MA 02139(US)**

(72) Inventor: **Seyferth, Dietmar**
**84 Bloomfield Street**
**Lexington Massachusetts 02173(US)**
Inventor: **Yu, Yuan-Fu**
**5056 Broughton Place**
**Dayton Ohio 45431(US)**

(74) Representative: **Bass, John Henton et al**
**REDDIE & GROSE 16 Theobalds Road**
**London WC1X 8PL(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to a process for preparing silicon-containing preceramic polymers useful for making silicon carbide and silicon nitride/silicon carbide ceramics and for their pyrolysis to such ceramic materials.

There is a great deal of interest in preceramic polymer materials, which can be pyrolyzed to yield silicon carbide, silicon nitride and other silicon-based ceramic materials. R.W. Rice, Amer. Ceram. Soc. Bull., 62: 889-892 (1983). Applications for such polymers include, among others:

1. formation into complex shapes and subsequent pyrolysis to give a ceramic material of the same shape;
2. spinning into continuous fibers whose subsequent pyrolysis yields ceramic fibers;
3. as a matrix material for carbon or ceramic fibers, or as a binder for ceramic powders (with subsequent pyrolysis to form a ceramic body);
4. oxidation-resistant coatings on otherwise oxidizable materials (such as carbon/carbon composites) - after the polymer coating is made, it can be pyrolyzed to give the resistant ceramic coating;
5. infiltration of porous ceramic bodies such as ones obtained from reaction-sintered silicon nitride by the polymer itself (if liquid) or by a solution of the polymer, with subsequent pyrolysis to form a ceramic, resulting in better strength, oxidation resistance, etc., of the body; and
6. formation of thin films of the ceramic material for electronics applications.

For instance, Penn et al., J. Appl. Polymer Sci., 27: 3751-61 (1982) describe the preparation of silicon carbide-silicon nitride fibers from a polycarbosilazane precursor. Tris(N-methylamino) methylsilane monomer was formed by reaction of monomethylamine and methyltrichlorosilane in dry petroleum ether and a polycarbosilazane resin was formed by passing the monomer over glass Raschig rings at 520 °C. The brittle polymer was soluble in methylene chloride and chloroform, etc. This product was spun into fibers, crosslinked in air and then pyrolyzed to give ceramic fibers.

Other polymer precursors for forming silicon carbide and silicon nitride ceramics have been described in U.S. Patent Nos. 3 108 985; 3 853 567; 3 892 583; 4 310 651 and 4 312 970. These linear or crosslinked polymers and processes for producing ceramic materials have generally been found to be deficient in one or more ways.

US-A-4 482 669 describes a preceramic polymer made by reacting an organodihalosilane with ammonia to form an ammonolysis product and treating such product with a basic catalyst capable of deprotonating an NH group that is adjacent to a SiH group.

US-A-4 535 007 describes a process for preparing a silicon nitride-containing ceramic material from an $R_3SiNH$-containing silazane polymer which is said to be rendered infusible by treatment with certain reactive metal halides by heating the silazane polymer to an elevated temperature under an inert atmosphere.

US-A-4 482 689 describes a process for preparing a $R_3'SiNH$-containing metallosilazane polymers.

S. Yajima, Amer. Ceram. Soc. Bull., 62: 893-898; 903 (1983) discloses using $(CH_3)_2SiCl_2$ as a starting material for a preceramic polymer for the preparation of SiC-containing ceramics. The polymer of Yajima is prepared by sodium metal condensation of $(CH_3)_2SiCl_2$ to result in a polysilane, $-[(CH_3)_2Si]_n-$ (n is approximately 30). This polysilane can then form either a "Mark I" polymer or a "Mark III" polymer depending upon the treatment used. Heating in an autoclave under argon at 100 kPa at 450 °-470 °C for 14 hours results in a Mark I polymer while adding a few percent of a polyborodiphenylsiloxane and heating under nitrogen at ambient pressure at 350 °C for 10 hours results in the Mark III polymer. In either case, the polysilicon backbone is converted to a polymeric chain in which the main repeat unit is:

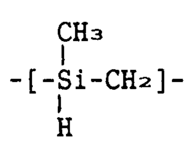

(I)

The Mark I polymer also contains some $-[(CH_3)_2SiCH_2]-$ units. The Mark III polymer contains some Si-Si bonds in the form $-[(CH_3)_2Si-Si(CH_3)_2]_n$(n = 2-8) units and a low percentage of $[(C_6H_5)_2SiO]$ units. These preceramic polymers can be processed to give ceramic fibers containing SiC, some free carbon and some $SiO_2$. However, there are problems associated with these polycarbosilane-derived ceramics. They have a tendency to crystallize below 1200 °C, they have a detrimental $SiO_2$ content as a result of an oxidative cure step, and free carbon and a relatively low ceramic yield is obtained upon their pyrolysis for a commercial

product. While the ceramic yield for the Mark III polymer is 68%, the yield for the Mark I polymer is only 54%.

It would be useful to have a polymer precursor that is formed from readily available and relatively cheap starting materials, that is stable at room temperature, is soluble in organic solvents and whose pyrolysis can typically provide a high yield of ceramic products. It would also be useful to be able to form a ceramic material upon pyrolysis which contains substantially no free silicon, carbon or $SiO_2$.

## Summary of the Invention

We have now found that reaction of an organic metal amide or a silylamide with an organosilicon polymer containing Si-H units yields new polymeric organosilicon compounds which are useful preceramic materials. Upon pyrolysis these typically give ceramic yields significantly better than the original polysiloxane compound.

The method according to the invention comprises: (a) mixing an organosilicon polymer containing Si-H repeat units with at least a catalytic amount of an organic metal amide or a silylamide in an organic solvent; (b) allowing the mixture of step (a) to react at room temperature or above; and (c) quenching the reaction mixture with a reactive electrophile, thereby forming said preceramic organosilicon polymer.

Preferably, the silylamide is an alkali or alkaline earth metal silylamide, and more especially a polymeric metal silylamide of the formula: $[(R^1SiHNH)_a(R^1SiN)_b(R^1SiHNM)_c]_m$ (where $a + b + c = 1$); $R^1$ is a lower alkyl group having from 1 to about 6 carbon atoms, a substituted or unsubstituted cycloalkyl group having from 3 to about 6 carbon atoms, a substituted or unsubstituted lower alkenyl group having from 2 to about 6 carbon atoms, a substituted or unsubstituted lower aryl group having from 6 to about 10 carbon atoms, a tri(lower)alkyl- or di(lower)alkylsilyl group or a di(lower) alkylamino group; M is an alkali metal or one-half equivalent of an alkaline earth metal; and m is an integer greater than 1). This metal poly(silylamide) may be preformed and added to the Si-H containing organosilicon polymer.

Alternatively, one may prepare the metal silylamide in situ, in the presence of the organosilicon compound, as in the embodiment described below.

Preferably the organosilicon polymer is a polysilane compound of the formula $[(RSiH)_x(RSi)_y]_n$, (where $x + y = 1$, n is an integer greater than 1, R is a lower alkyl group having from 1 to about 6 carbon atoms, a lower alkenyl group having from 2 to about 6 carbon atoms, a substituted or unsubstituted lower aryl group having from 6 to about 10 carbon atoms, or a tri(lower)alkyl- or di(lower)alkylsilyl group), or a polycarbosilane polymer containing repeat units of the formula $[R^aSi(H)\text{-}(CH_2)_q]$, i.e.,

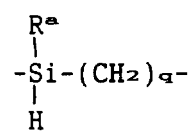 (II)

(where q is an integer 1 or greater, $R^a$ is H, a lower alkyl group having from 1 to about 6 carbon atoms, a cycloalkyl group having from 3 to about 6 carbon atoms, or a substituted or unsubstituted lower aryl group having from 6 to about 10 carbon atoms).

Aryl-substituted polymers of the type $[R^aSi(H)\text{-}(CH_2)_q]$, and $[RSiH]_n$ (e.g., where R, or $R^a$ is phenyl), react in the same way as the above described polycarbosilanes and organopolysilanes to give new polycarbosilane/organopolysilazane, organopolysilane/organopolysilazane and hybrid polymers, respectively.

In one embodiment of the present invention, the polymeric metal silylamide is generated by treating the ammonolysis product of $R^1SiHX_2$ ($R^1$ is as defined above and X is a halogen) with a basic catalyst capable of deprotonating the hydrogen from a nitrogen atom adjacent to a silicon atom. The silylamide thus formed can react with the organosilicon compound, for example, the $[R^aSi(H)\text{-}(CH_2)_q]$ already present. With either the preformed polysilylamide or the in situ silylamide procedure, the reaction mixture containing the organosilicon polymer having Si-H repeat units and the polysilylamide is stirred at room temperature and preferably heated at reflux in a suitable solvent such as tetrahydrofuran to complete the reaction. The resulting solution is then cooled and quenched with an organic halide or a silicon halide to produce the preceramic organosilicon polymers of the present invention. The polymers formed by either method can then be pyrolyzed to yield ceramic materials in high yield.

## Brief Description of Drawings

Figure 1 is a proton NMR spectrum comparing a polymer formed by adding already preformed polysilylamide (III-37) with a 1:1 by weight physical mixture of polycarbosilane and preformed polysilylamide.

Figure 2 is a proton NMR spectrum comparing a polymer formed by adding already preformed polysilylamide (III-7) with a polymer formed with polysilylamide generated in situ (III-42).

Figure 3 is a thermogravimetric analysis (TGA) curve of polymer III-7.

Figure 4 is a TGA curve of polymer III-42.

Detailed Description of the Invention

We have discovered that the reaction of an organic metal amide or a silylamide with an organosilicon polymer containing Si-H units (referred to as an Si-H containing organosilicon polymer) results in novel preceramic polymers. Most preferably, the metal amide is a polymeric metal silylamide of the formula $[-(R^1SiHNH)_a(R^1SiN)_b(R^1SiHNM)_c]_m$ (where $a + b + c = 1$; $R^1$ is a lower alkyl group having from 1 to about 6 carbon atoms, a substituted or unsubstituted cycloalkyl group having from 3 to about 6 carbon atoms, a substituted or unsubstituted lower alkenyl group having from 2 to about 6 carbon atoms, a substituted or unsubstituted lower aryl group having from 6 to about 10 carbon atoms, a tri(lower)alkyl- or di(lower)alkylsilyl group or a di(lower)alkylamino group; M is an alkali metal or one-half equivalent of an alkaline earth metal; and m is an integer greater than 1). However, as will be discussed below other metal amides can be used in the present invention.

The Si-H containing organosilicon polymer is preferably a polysilane compound of the formula $[(RSiH)_x(RSi)_y]_n$, (where $x + y = 1$, n is an integer greater than 1, R is a lower alkyl group having from 1 to about 6 carbon atoms, a lower alkenyl group having from 2 to about 6 carbon atoms, a substituted or unsubstituted lower aryl group having from 6 to about 10 carbon atoms, or a tri(lower)alkyl- or di(lower)alkylsilyl group), or a polycarbosilane polymer containing repeat units of the formula $[R^aSi(H)-(CH_2)_q]$,i.e.,

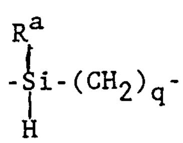 (II)

(where q is an integer 1 or greater, $R^a$ is H, a lower alkyl group having from 1 to about 6 carbon atoms, a cycloalkyl group having from 3 to about 6 carbon atoms, or a substituted or unsubstituted lower aryl group having from 6 to about 10 carbon atoms).

In accord with the present invention, treatment of, for example, organopolysilanes with a metal amide will provide higher molecular weight preceramic materials and improve the ceramic yield. Preferably, one uses organic alkali metal amides for treating the organopolysilane. Organic alkali metal amides are well known to the person of ordinary skill in the art. Examples include: potassium piperidide,

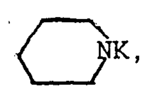

potassium ethylamide, $C_2H_5NHK$, and potassium diisopropylamide, $(i-C_3H_7)_2NK$, corresponding lithium, sodium, rubidium and cesium derivatives and the like. Polymeric secondary amines may be partially deprotonated by a strong base to give polymers containing metal amide functions. Such products also may be used to react with $[(CH_3SiH)_x(CH_3Si)_y]$ in this invention. Examples of such polymeric amines are: poly(ethyleneimine), $[CH_2CH_2NH]_n$, or Ciba-Geigy Chimassorb™ 944 polymer,

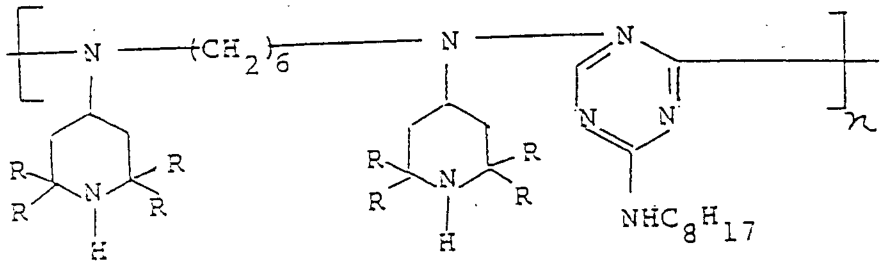

The reaction of $CH_3SiHCl_2$ with an alkali metal will produce methylsilicon compounds of the formula $[-(CH_3SiH)_x(CH_3Si)_y]_n$, where x + y = 1; and n is an integer greater than 1 (hereinafter such compounds will be referred to as "methylpolysilanes"). The ceramic product obtained when this compound is pyrolyzed contains an excess of "free" silicon, rather than the ideal 1Si:1C composition. Further, depending upon the particular process used to obtain the methylpolysilane, other deficiencies can arise. A ceramic yield of less than 50% after pyrolysis typically represents an unacceptable preceramic polymer. Of the above described methylpolysilanes, those with $x \cong y$ which on pyrolysis gave a reasonable ceramic yield, had only a limited solubility in organic solvents, thus limiting further processing. Additionally, conversion of these polymers to ceramic fibers appears to require a photolysis-oxidation cure step. A methylpolysilane of the above-described formula, in which the crosslinking of the product is not as excessive (x>y) and, which is, therefore, more soluble in organic solvents, on the other hand provides an unacceptably low ceramic yield on pyrolysis, e.g., 12-27% in various runs. Consequently, alkali metal condensation of $CH_3SiHCl_2$ does not give a very useful preceramic polymer which can be used to form SiC and other Si/C ceramic materials.

After extensive research we have now found that organopolysilanes such as the methylpolysilanes obtained in the above reactions, upon treatment with catalytic quantities of organic metal amides or silylamides in accord with the present invention, yield preceramic polymers of higher molecular weight which upon pyrolysis give significantly higher ceramic yields. Such polymers, when prepared as described herein, are soluble in organic solvents.

The resulting products obtained when the organic alkali metal amides were used with the methylpolysilanes were white solids with a higher molecular weight than the starting material. The ceramic yields obtained on pyrolysis to 1000 °C typically are 50 to 60%, or more.

Another example of useful silylamides is a diorganocyclopolysilazane that is either partially or completely ring-opened. The diorganocyclopolysilazane comprises units having the formula $[R^1R^{11}SiNH]_m$ where $R^1$ is a lower alkyl group having from 1 to about 6 carbon atoms, a substituted or unsubstituted alkenyl group having from 2 to about 6 carbon atoms, a substituted or unsubstituted lower aryl group having from 6 to about 10 carbon atoms, a tri(lower)alkyl- or di(lower)alkylsilyl group or a di(lower)alkylamino group; $R^{11}$ is defined as $R^1$, and may be the same or different, and m is an integer greater than 1.

More preferably, however, one utilises an alkali or alkaline earth metal silylamide. Common metal silylamides that can be used in the practice of the present invention include: $[R^2R^3R^4Si]_2NM$ wherein $R^2$, $R^3$ and $R^4$ are each a lower alkyl group having from 1 to about 6 carbon atoms, a lower alkoxy group having from 1 to about 6 carbon atoms, a substituted or unsubstituted vinyl group, a substituted or unsubstituted allyl group, a substituted or unsubstituted lower aryl group having from 6 to about 10 carbon atoms, a tri(lower)alkyl- or di(lower)alkylsilyl group or a di(lower)alkylamino group, $R^2$, $R^3$ and $R^4$ may be the same or different; and M is an alkali metal or one-half equivalent of an alkaline earth metal. Common alkali metal silylamides include: $[(CH_3)_3Si]_2NK$, $[(CH_2=CH)Si]_2NK$. The metal silylamide can also be partially deprotonated cyclo-$[R^5R^6SiNH]_m$ containing $[R^5R^6SiNM]$ units wherein $R^5$ and $R^6$ are each a lower alkyl group having from 1 to about 6 carbon atoms, a lower alkoxy group having from 1 to about 6 carbon atoms, a substituted or unsubstituted vinyl group, a substituted or unsubstituted allyl group, a substituted or unsubstituted lower aryl group having from 6 to about 10 carbon atoms, a tri(lower)alkyl- or di(lower)-alkylsilyl group or a di(lower)alkylamino group, $R^5$ and $R^6$ may be the same or different; M is as defined above and m is an integer greater than 1. For example, the reaction products of one molar equivalent of KH with one of cyclo-$[(CH_3)_2SiNH]_3$ or of one molar equivalent of KH with one of cyclo-$[(CH_3)(CH_2=CH)SiNH]_3$, and the like. The person skilled in the art can select other alkali metal silylamides to use, including the lithium, sodium, rubidium and cesium derivatives. Treatment of either the organopolysilane or the polycarbosilane with the alkali metal silylamides generally increases the ceramic yield in the pyrolysis of the resulting preceramic polymer.

Polycarbosilane polymers that are used in the present invention preferably contain a multiplicity of repeat units of the formula $[R^aSi(H)-(CH_2)_q]$ (where q and $R^a$ are as defined above)(hereinafter polymers

containing such repeat units are referred to as "polycarbosilanes"). The reaction of these polycarbosilanes with an organic metal amide or silylamide results in novel preceramic polymers. Typically, the pyrolysis of this new polymer gives a black ceramic solid in a yield that is about 10% to 50% greater than the parent polycarbosilane.

The polycarbosilane polymer should contain at least 25 mole % of repeat units of the formula II, i.e. $[R^aSi(H)-(CH_2)_q]$, in addition to other repeat units, such as $[R^a{}_2Si(CH_2)_q]$ (e.g. the Yajima polymers). Preferably the polycarbosilane polymer contains at least 35 mole % of repeat units of formula II. More preferably, the polymer contains at least 50 mole % repeat units of formula II.

The polymer may also contain a mixture of repeat units of the above described formula, e.g., both $[R^aSi(H)-(CH_2)_q]$ and $[R^{a'}Si(H)-(CH_2)_q']$ ($R^{a'}$ and q' are defined the same as $R^a$ and q, respectively, but $R^{a'}$ may be different than $R^a$ and q'may be different than q). $R^a$ is preferably a lower alkyl group, more preferably $R^a$ is $CH_3$. Preferably q is equal to 1 - 3, more preferably it is equal to one.

The polycarbosilane and alkali metal silylamide are typically added in a weight ratio of polycarbosilane: alkali metal silylamide of about 10:1 or less. Preferably this ratio is about 5:1 or less. More preferably the ratio is about 3:1 or less. Most preferably the ratio is about 1:1.

Preferably the polymeric silylamide used has the formula $[(R^1SiHNH)_a(R^1SiN)_b(R^1SiHNM)_c]_m$. These polysilylamide compounds have been described in U.S.-A-4,482,669. $R^1$ preferably is a lower alkyl group, more preferably $CH_3$. This patent describes the formation of novel preceramic polysilazanes by treatment of the mainly cyclic ammonolysis product of, for example, $CH_3SiHCl_2$ with catalytic quantities of a base, for example, KH in organic solvents, for example, tetrahydrofuran, THF. After these compounds are treated with an electrophile such as methyl iodide, $CH_3I$, polymers having the general formula $[(CH_3SiHNH)_a(CH_3Si)_b$-$(CH_3SiHNCH_3)_c]_m$ are obtained. Prior to the addition of $CH_3I$, a reactive "living" polymer intermediate, a metal silylamide of the type $[(CH_3SiHNH)_a(CH_3SiN)_b(CH_3SiHNM)_c]_m$ is obtained. This intermediate species can react with electrophiles other than $CH_3I$, e.g., with diverse chlorosilanes. Pyrolysis of such $CH_3I$-treated polysilazanes typically yields a ceramic material containing SiC, $Si_3N_4$ and "free" carbon.

The use of the polymeric metal silylamide of the formula $[(R^1SiHNH)_a(R^1SiN)_b(R^1SiHNM_c]_m$ in one embodiment of the present invention upgrades the Si-H containing organosilicon polymer, for example, the organopolysilanes and the polycarbosilanes to new polymers which give a high ceramic yield on pyrolysis. When this metal silylamide, $[(R^1SiHNH)_a(R^1SiN)_b(R^1SiHNM)_c]_m$, is reacted with an Si-H containing organosilicon polymer, the reaction product after treatment with a suitable electrophile such as an organic or a silyl halide, incorporates both starting materials. When this reaction product is pyrolyzed, the ceramic yield is significantly greater than that of the "parent" organosilicon polymer.

The weight ratio of Si-H containing polymer to metal silylamide can vary widely. For example, mole ratios of organopolysilane: polymeric metal silylamide from about 4:1 to about 1:4, and preferably from 2.5:1 to 1:2 typically provide useful results. Weight ratios of polycarbosilane: polymeric metal silylamide from about 10 to about 1; and preferably from 5:1 to 1:1 typically provide useful results. However, in both cases other ratios can be used depending on the particular starting materials and their pyrolysis characteristics.

The organosilicon polymers thus formed by reaction of the organosilicon polymer containing Si-H repeat units with preformed $[(R^1SiHNH)_a(R^1SiN)_b(R^1SiHNM)_c]_m$, followed by treatment with an electrophile, henceforth will be referred to as "graft" polymers.

Polysilanes of type $(RSiH)_n$ (i.e., the general case where y = 0, x = 1) also react with the polymeric silylamides, $[(R^1SiHNH)_a(R^1SiN)_b(R^1SiHNM)_c]_m$. Thus, a reaction of $(C_6H_5SiH)_n$ with $[(CH_3SiNH)_a(CH_3SiN)_b$-$(CH_3SiHNK)_c]_m$ ( 1:1 molar ratio) in THF at room temperature gave a new organosilicon polymer which was found to be an effective ceramic precursor, giving a $Si_3N_4$/SiC/C ceramic product in high yield upon pyrolysis to 1000 ° C.

Additionally, use of the reaction product of organopolysilanes or polycarbosilanes with the polymeric metal silylamide results in a product that is self-curing as the temperature is raised in the production of ceramic material. Consequently, with these polymers it is possible to avoid the formation of $SiO_2$ which results when an oxidative cure step is used. This again is an improvement over pyrolysis of the precursor silane compound alone.

In this system, R or $R^a$ is preferably a lower alkyl, more preferably, R or $R^a$ is $CH_3$. However, R or $R^a$ need not be the same and, as aforesaid, mixtures of Si-H containing organosilicon compounds and/or repeat units, e.g., $[(RSiH)_x(RSi)_y]_n$ and $[(R''SiH)_{x'}(R''Si)_{y'}]_{n'}$, $[R^aSi(H)-(CH_2)_q]$ and $1R^{a'}$ $Si(H)-(CH_2)_q']$ and $[(RSiH)_x$-$(RSi)_y]_n$ and $[R^aSi(H)-(CH_2)_q]$ can be used to obtain further flexibility in tailoring the properties of the aforesaid product. Mixed polymers of the type $[(RSiH)_a(RSi)_b(RR'Si)_c]_m$ (where a, b, c, m and R are as defined above, and R' is defined as is R above and R' may be the same or different than R) can be used as well. Preferably, $R = R' = CH_3$, $R^a = R^{a'} = CH_3$, $R^a = R = CH_3$. Further, these aforesaid mixtures of compounds can be used to obtain additional flexibility in tailoring the properties of the aforesaid product.

As mentioned, also included in this invention is the case of $[(RSiH)_x(RSi)_y]_n$, where $x = 1$, $y = 0$, with R as defined above, where $[(RSiH)]_n$ may be a linear or a mixture of cyclic species, or a hybrid of both types. For example, $[PhSiH]_n$ (Ph is a phenyl group), cf, Aitken, C. et al., J. Organomet, Chem., 279:C11-C13 (1985), reacts in the same way as the above-described organopolysilanes to provide new organopolysilane/organopolysilazane hybrid polymers. These mixtures will be particularly useful in attempts to avoid excess free silicon or carbon. The case of aryl-substituted repeat units of $[R^aSi(H)\text{-}(CH_2)_q]$ for example, where $R^a$ is a phenyl or substituted phenyl group, and $R^a$ can be a lower aryl group, is also included.

Mixtures of metal polysilazanes, i.e., $[(R^1SiHNH)_a(R^1SiN)_b(R^1SiHNE)_c]_m$ and $[(R^{1'}SiHNH)_{a'}(R^{1'}SiN)_{b'}(R^{1'}SiHNE)_{c'}]_{m'}$ (where E is the moiety introduced by reaction with an electrophile, e.g., a lower alkyl group of 1 to 6 carbon atoms, preferably $CH_3$, or a silyl group), also may be used.

The preceramic product obtained by using alkali metal silylamides, even in only catalytic amounts, differs from the starting organosilicon compound. This difference is confirmed by proton NMR spectra. A typical organopolysilane starting material when R = $CH_3$ shows an observed proton NMR integration ratio, $SiCH_3/SiH$, ranging from 3.27 through 3.74 (see Table 1). In contrast, the similar ratio for products obtained when the starting material is reacted with an alkali metal silylamide, range from 8.8 to 14.

This difference in products apparently arises because both Si-H and Si-Si bonds are reactive towards nucleophilic reagents. Although not wishing to be bound by theory, it is believed that when metal silylamides are used the following processes result:

$$(R_3Si)_2NM + \geqslant SiH \rightarrow SiN(SiR_3)_2 + MH \quad (1)$$

$$(R_3Si)_2NM + \geqslant SiH \rightarrow (R_3Si)_2NH + SiM\leqslant \quad (2)$$

$$(R_3Si)_2NM + \geqslant Si\text{-}Si \rightarrow (R_3Si)_2N\text{-}Si\leqslant + SiM\leqslant \quad (3)$$

In each of the above reactions a new reactive nucleophile is generated. In the first reaction, this nucleophile is MH, while in the second and third reactions, the nucleophile is a silyl metal compound. Thus, nucleophilic attack on the $[CH_3SiH)_x(CH_3Si)_y]_n$ system will recur during these reactions and some of these oligomeric species, which comprise the starting materials, are linked together, resulting in products of higher molecular weight. There are other processes that are possible as well: e.g.,

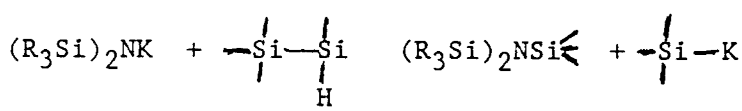

Thus, not only anionic species but also silylenes can be involved as intermediates.

The "graft" polymer is formed by combining the already formed polymeric metal silylamide with the Si-H containing organosilicon polymer, for example, the organopolysilane in varying proportions in an organic solvent. Thereafter, the mixture is stirred at room temperature for sufficient time for the two compounds to react. Any organic solvent in which both polymer systems are soluble without reaction can be used. Such organic solvents include, for example, THF, diethyl ether, glycol ethers, alkanes, arenes and combinations thereof. The mixture may be heated above room temperature, and can be refluxed to speed up the completion of the reaction. After refluxing, the mixture is quenched with an electrophile, E-X, to form the organosilicon "graft" polymer. The electrophile can be an alkyl halide, sulfate, or sulfonate; a halosilane; or the like. Typically, $CH_3I$ or a chlorosilane is used, although other equivalent electrophiles well-known to those skilled in the art can also be used. E is preferably a lower alkyl group or silyl group; X preferably a halide, sulfate or sulfonate.

The organosilicon polymer formed by the present ("graft") process with the organopolysilane is typically obtained in yields greater than 85% based on weight of the starting materials with a variable molecular weight, typical values being in the 1800-2500 g/mol range. This preceramic organosilicon polymer can then by pyrolyzed under inert atmosphere conditions to result in a ceramic material in high yield. Typically, pyrolysis under nitrogen gives ceramic products in a yield of 70-83%.

The organosilicon polymers formed by the present ("graft") process typically give ceramic yields 10% to 50% greater (based on weight of the starting materials) than the polycarbosilane (See Table 2) and have a variable molecular weight.

Figure 1 is a proton NMR spectrum comparing a 1:1 by weight physical mixture of the polycarbosilane

and the polysilazane and a "graft" polymer formed by reacting the polycarbosilane with a preformed silyamide. The NMR spectrum shows that a new polymer is obtained when the polycarbosilane and the silylamide are heated together in solution and then quenched with methyl iodide. First, the $CH_3Si/HSi$ integrated ratio differ, 9.4 in the former, 8.7 in the latter. Secondly, the $CH_3SiH$ NH proton (at $\delta$ 5.06) to $CH_3SiH$ (at $\delta$ 4.50) proton ratio has changed from about 2 in the physical mixture to about 1 in the reaction mixture.

These preceramic organosilicon polymers can then by pyrolyzed under nitrogen or an inert atmosphere to result in ceramic materials in high yield. Typically, pyrolysis under nitrogen gives ceramic products in a yield of 64-88%.

What is referred to herein as an "in situ" polymer is obtained by carrying out the cyclo-$(R^1SiHNH)/_n/MH$ reaction in solution in the presence of the Si-H containing organosilicon polymer. In this method, the methylpolysilane or polycarbosilane is added to an organic solvent. Afterwards, the cyclo-$(R^1SiHNH)_n$ mixture (generated by reacting in solution anhydrous ammonia with $R^1SiHX_2$, where $R^1$ is the same as defined earlier and X is a halogen) is added.

One then adds to the solution a basic catalyst capable of deprotonating the hydrogen from a nitrogen atom adjacent to a silicon atom. See U.S. Patent No. 4,482,669. The reaction mixture gradually changes color and hydrogen is evolved. The resulting solution is then stirred at room temperature for sufficient time for the silylamide intermediates and the Si-H containing organosilicon polymer to react. It can be heated above room temperature, and can be heated at reflux to speed the completion of the reaction. Afterwards, the reaction mixture is allowed to cool to room temperature, if required, and quenched with an electrophile such as $CH_3I$ or a halosilane, such as a chlorosilane, to produce the organosilicon "in situ" polymer. The molecular weight of the "in situ" polymer is variable. For example, typical values of the polymer formed using an organopolysilane are between 1600 g/mole to 2750 g/mole. On pyrolysis this material provides a high yield of a black ceramic material.

On pyrolysis the polycarbosilane-derived material provides a yield of a black ceramic material, that is typically 10% to 50% greater than that obtained on pyrolysis of the polycarbosilane (see Table 2).

The organosilicon polymer formed by either of the above "graft" or "in situ" methods usually is separated from solution. The solvent is removed by using techniques well known to a person of ordinary skill in the art. One standard method is distillation, preferably trap-to-trap distillation. The polymer, typically a white powder that is soluble in an organic solvent, is thereby obtained. One may also combine trap-to-trap distillation with centrifuging, followed by trap-to-trap distillation to separate the polymer from solution.

The "in situ" preceramic polymer differs physically from the "graft" preceramic polymer. Major differences are observed in their proton NMR spectra and in the form of their thermogravimetric analysis (TGA) curves.

Figure 2 shows the proton NMR spectrum of a graft polymer and that of an "in situ" polymer. Both polymers have similar starting molar ratios of $[(CH_3SiH)_x(CH_3Si)_y]$: $(CH_3SiHNH)$, [1.5:1 and 1.45:1, respectively], in terms of initial reactants used. However, in the "in situ" polymer the intensity ratio of the $\delta$ 5.1, 4.7 to the $\delta$ 4.0 proton signals is 12, while in the "graft" polymer this ratio is 1. The signals around $\delta$ 5.1 and 4.7 are due to the $CH_3SiHN$ proton while those around $\delta$ 4.0 are due to $CH_3SiH$ protons which are attached to silicon atoms not bound to nitrogen. Accordingly, this difference in ratio demonstrates that the two polymers have different structures.

Although not wishing to be bound by theory, it appears likely that in the "in situ" preparation, intermediates formed, for example, by the action of KH on $(CH_3SiHNH)_n$ cyclics also react with the Si-H containing organosilicon polymer, for example, the organopolysilane $[(CH_3SiH)_x(CH_3Si)_y]_n$ before the polymeric metal silylamide which is the starting reactant in the "graft" procedure has a chance to be formed to its usual extent. This results in either less of the original $CH_3SiHNH$ protons being lost and/or more of the Si-H containing organosilicon system being reacted.

The TGA curve of the "graft" polymer is shown in Figure 3, while that of the "in situ" polymer is shown in Figure 4. These two curves differ as well. In the "graft" polymer, the curves show that there is a small weight loss between 100°C and 200°C which begins at about 100°C. In contrast, with the "in situ" polymer, the initial small weight loss occurs only at higher temperatures, approximately beginning at 175°C. Both types of polymers are useful as preceramic materials.

Table 2

| TGA Ceramic Yield of Preceramic Polymer | |
|---|---|
| Wt ratio of Polycarbosilane: Alkali Metal Silylamide | Ceramic Compound Yield (Example) |
| 100:0 | 58% B.(2) |
| 1:1 | 84% III-37 D.(3)(a)(i) |
| 5:1 | 67% III-57 D.(3)(a)(ii) |
| 1:1 | 88% III-39 D.(3)(b)(i) |
| 5:1 | 64% III-59 D.(3)(b)(ii) |
| 1:1 | 86% III-38 E.(2)(a)(i) |
| 5:1 | 80% III-56 E.(2)(a)(ii) |
| 1:1 | 86% III-40 E.(2)(b)(i) |
| 5:1 | 66% III-58 E.(2)(b)(ii) |

The use of the metal silylamide of the formula $[(R^1SiHNH)_a(R^1SiN)_b(R^1SiHNM)_c]_m$ not only improves the ceramic yield of the organopolysilanes, but, more significantly, when this metal silylamide is reacted with organopolysilane of the formula $[(RSiH)_x(RSi)_y]_n$ in the appropriate stoichiometry, the reaction product of $[-(RSiH)_x(RSi)_y]_n$ and $[(R^1SiHNH)_a(R^1SiN)_b(R^1SiHNM)_c]_m$ (where m and n are integers greater than 1), after treatment with a suitable electrophile such as an organic or a silyl halide, incorporates both starting materials. When this reaction product is pyrolyzed, the excess silicon normally obtained in the pyrolysis of the organopolysilane alone and the excess carbon normally obtained in the pyrolysis of the quenched polymeric metal silylamide alone combine so that there is no substantial excess of either element in the ceramic product. Consequently, one can obtain a ceramic material with less than about 0.1% of free silicon and less than about 0.1% of free carbon, i.e., a ceramic material containing substantially no free carbon and no free silicon. The exact combination of the two compounds necessary to result in the desired stoichiometry can readily be calculated by a person of ordinary skill in the art on the basis of the results of the analyses of the ceramic products obtained in the pyrolysis of the separate polymers. Mole ratios of organopolysilane : polymeric metal silylamide from about 4:1 to about 1:4, and preferably from 2.5:1 to 1:2 typically provide useful results. However, other ratios can be used depending on the particular starting materials and their pyrolysis characteristics.

The excess of free carbon, which can be a problem with the starting polycarbosilanes, can be dealt with by using a ternary system of: (1) the polycarbosilane; (2) the polysilazane (as the polymeric silylamide, either preformed or generated in situ) and (3) a polysilane whose pyrolysis alone gives a ceramic product which contains an excess of silicon. Examples of such polysilanes are organopolysilanes as described above, for example, those which are produced by the sodium condensation of methyldichlorosilane. In these reactions the organopolysilane is preferably as defined above, i.e $[(RSiH)_x(RSi)_y]_n$. More preferably R is a lower alkyl group, most preferably R is $CH_3$. Using an appropriate mixture of the three polymers (which can be calculated from the results of the analyses of the ceramic products of the pyrolysis of each individual polymer, e.g., the $CH_3I$- quenched polymer in the case of the polymeric silylamide), one can obtain a ceramic product which contains a minimal excess of either element, carbon or silicon. Such hydrid ternary preceramic polymers are soluble in organic solvents and, depending on component ratios used, are of variable molecular weight. Their pyrolysis gives black ceramic products in high (generally > 80%) yield.

Physical blends of Si-H containing organosilicon polymers, for example the organopolysilane, or the polycarbosilane polymers containing repeat units of $[R^aSi(H)\text{-}(CH_2)_q]$, for example, the Yajima polycarbosilane with the "quenched" $[(R^1SiHNH)_a(R^1SiN)_b(R^1SiHNE)_c]_m$ organosilazane polymer of U.S. Patent No. 4,482,669 can be used since these react when they are heated together. When approximately equal molar quantities of the polymers where R, or $R^a = CH_3$, $R^1 = CH_3$, $q = 1$ and $E = CH_3$, were mixed and finely ground together and then subjected to pyrolysis to 1000°C, ceramic yields was obtained which were approximately the average of the ceramic yields when the organopolysilane and the organosilazane polymers were pyrolyzed separately, and were significantly higher than that which resulted when the polycarbosilane was pyrolyzed separately (see Table 2).

When polycarbosilane/orgosilazane mixtures were heated, in the absence of a solvent at 200°C under nitrogen, white foamy solids were obtained which were insoluble in nonpolar organic solvents, thus demonstrating that a reaction had occurred below 200°C and prior to pyrolysis. When organosilane/organosilazane mixtures were heated, either in the absence of a solvent at 100°C under

nitrogen or in a toluene solution at reflux, white powders were obtained which were insoluble in nonpolar organic solvents, again demonstrating that a reaction occurred.

Ternary blends of the polycarbosilane, the $[(CH_3SiH)_x(CH_3Si)_y]_n$ liquid polysilazane and the $[-(CH_3SiHNH)_a(CH_3SiN)_b(CH_3SiHNCH_3)_c]_m$ polysilazane behaved similarly. An obvious reaction occurred when such a mixture had been heated to 200°C, since the originally soluble mixture became insoluble in organic solvents.

The combined polymers obtained by the "graft," "in situ" and physical blend methods can be converted to black ceramic fibers. Pyrolysis of pressed bars of the combined polymers to 1000°C provides a black solid product. In other experiments, silicon carbide powder was dispersed in a toluene solution containing 25% by weight of the combined organosilane/organosilazane polymers. The solvent was evaporated and the residue, a fine powder of silicon carbide with combined polymer binder was pressed into bars and pyrolyzed at 1000 ° C. A ceramic bar was obtained showing a low weight loss and slightly shrunken size.

Similarly, when silicon carbide powder was dispersed in toluene solutions of the combined polycarbosilane/organosilazane polymers. The solvent was evaporated and the residue, a fine powder of silicon carbide with combined polymer binder, was pressed into bars and pyrolyzed at 1000°C. A ceramic bar was obtained showing a low weight loss and slightly shrunken size.

The invention will be further illustrated by the examples that follow:

A. General

All glassware was flame-dried under vacuum or under a stream of nitrogen prior to use. Tetrahydrofuran (THF) and benzene were distilled from sodium and benzophenone ketyl. Hexane was distilled from $LiAlH_4$. Solvents were deoxygenated by bubbling nitrogen through them prior to use. Methyldichlorosilane, $CH_3SiHCl_2$, and dimethyldichlorosilane, $(CH_3)_2SiCl_2$, were commercial products. The polycarbosilane was purchased from Dow Corning Corporation. Its characterization is reported below. The ammonolysis of $CH_3SiHCl_2$ in ether and in THF solution has been described in U.S. Patent No. 4,482,699 (D. Seyferth and G.H. Wiseman), as has the reaction of ammonolysis products, $[CH_3SiHNH]_m$, with KH to give the polymeric silylamide, $[(CH_3SiHNN)_a(CH_3SiN)_b(CH_3SiHNK)_c)]_m$.

Poly(methydrosiloxane), $[CH_3Si(H)O]_n$ was purchased from Petrarch (Catalog #PS 122) and was used as recieved. Piperidine, diisopropylamine, and propylamine were purchased and were distilled from CaO before use. Reagent grade sodium shot was further purified by creating a dispersion in refluxing xylene and allowing this to cool, with stirring. This served to remove most of the oxide coating. Anhydrous ammonia was dried further by passing it through a KOH column.

$^1H$ NMR spectra were recorded on a JEOL-FX-90Q spectrometer operating at 90 MHz. Elemental analyses were performed by Galbraith Laboratories, Knoxville, Tennessee. Molecular weights were determined by measuring the freezing point depression of a weighed sample of benzene caused by a weighed sample of product. Thermal analyses were performed using a Perkin-Elmer TGS-2 Thermogravimetric Analyzer interfaced with a System 7/4 Thermal Analysis Controller on a DuPont 950 TGA connected to a DuPont thermal analysis system. Samples were heated, under argon, from 25-1000°C at a rate of 10°C/min. Large scale pyrolyses were carried out in fused silica boats using a Lindberg 59344 tube furnace (25-1000°C, 10°C/min) under argon atmosphere. Scanning electronmicrographs were obtained using an AMR instrument, operating at 20 KV.

B. Preparation of Organosilicon Compounds

1. Preparation of $[(CH_3SiH)_x(CH_3Si)_y]_n$ (all operations under nitrogen)

a. In THF Medium.

A 500 ml, three-necked, round-bottomed flask equipped with a stir-bar, a dropping funnel and a reflux condenser was charged with 50.5 g (2.20 g atom) of Na metal. The flask was attached to a Schlenk manifold, evacuated and refilled with nitrogen three times. THF (200 ml) was added and the dropping funnel was charged with 65 ml (0.625 mol) of $CH_3SiHCl_2$. The silane was added to the stirred Ha suspension during the course of 45 min., after which time the reaction mixture was cloudy and slightly warm. The mixture was stirred for 16 hours at room temperature and 48 hours at reflux; it then was cooled to room temperature. Hexane (60 ml) was added. The mixture was transferred by cannula to a heavy-walled centrifuge bottle and centrifuged. The supernatant layer was transferred to a 1 liter round-bottomed flask

(under nitrogen). THF (50 ml) and hexane (30 ml) were added to the residual solid and the resulting suspension was centrifuged. The supernatant layers were combined and solvents were removed by trap-to-trap distillation in vacuum until the residual liquid volume was about 100 ml. This liquid was cannulated into a 250 ml single-necked flask and the remaining solvent was removed in vacuo to leave 13.2 g (0.30 mol, 48% yield) of a white, glassy solid. On being heated in a sealed capillary (in vacuo) this solid softened around 40 °C and "melted" between 130-140 °C with gas evolution, leaving a thick gum. There was no further change up to 300 °C except for a gradual increase in viscosity. The product was poorly soluble in hexane, only somewhat soluble in benzene (precluding measurement of its cryoscopic molecular weight in this solvent) and quite soluble in THF.

NMR (90 MHz, in $CDCl_3$): $\delta$ 0.10-0.61 (m, $SiCH_3$, 7.5H) and 3.55-3.90 (m, SiH, 1H). Based on the reasonable assumption that every Si atom bearing a H substituent also bears a $CH_3$ substituent, the integrated $CH_3Si$ and SiH intensities lead to a constitution $[(CH_3SiH)_{0.4}(CH_3Si)_{0.6}]_n$.

| | | |
|---|---|---|
| Anal. Calcd for $CSiH_{3.4}$: | C, 27.60; | H, 7.87. |
| Found: | C, 27.18; | H, 7.17. |

IR (KBr, Nujol): 2170(sh), 2100(s, Si-H), 1408(m), 1260(m, Si-$CH_3$), 1249(s, Si-$CH_3$), 1060(br), 1019(s), 931-(s), 865(vs, Si-$CH_3$), 770(vs), 685(vs), $cm^{-1}$.

TGA(25-1000 °C, 10 °C/min.): 60% yield of a gray-black ceramic solid. A tube furnace pyrolysis of 3.20 g of this material to 1500 °C gave 1.52 g (48%) of a gray ceramic powder.

Anal. of the Ceramic Powder. Found: C, 22.56; Si, 78.42; H, 0.01; N, 0.009%. (SiC requires C, 29.94; Si, 70.06%; actual composition: SiC + 0.49 Si). X-ray powder diffraction ($d_o$,Å): 1.315(s) ($\beta$ -SiC), 1.542(s) ($\beta$ -SiC), 1.91(m) (Si), 2.181(m), ($\beta$ -SiC), 2.52(vs) ($\beta$ -SiC), 3.13(m) (Si).

A mass spectral analysis of the pyrolysis gas in another experiment showed the following: no gaseous products were observed up to 385 °C, then fragment ions corresponding well with the reported fragmentation of $CH_3SiH_3$. At 445 °C, $CH_3SiH_3$ was still observed and a peak at m/z = 16 ($CH_4$) began to grow in. By 580 °C, when weight loss was about over, only the methane peak was observable.

b. In Hexane/THF Medium

In a dry box, a 1 liter three-necked, round-bottomed flask equipped with a stir-bar, a dropping funnel and a reflux condenser was charged with 75.0 g (3.26 mol) of sodium metal. The flask was attached to a Schlenk manifold, evacuated and flushed with nitrogen. THF (70 ml) and hexane (420 ml) were added and the dropping funnel was charged with 150 ml (1.44 mol) of methyldichlorosilane. Methyldichlorosilane was added slowly into the flask over a 3 hour period. The reaction solution turned purple and by the end of the addition was at gentle reflux. The reaction mixture was stirred at room temperature for 2 hours and then heated at reflux for 16 hours. After it had been cooled to room temperature, the reaction mixture (except for the large NaCl crystals) was transferred via cannula into a heavy-walled glass bottle. The mixture was centrifuged and the clear, colorless supernatant layer transferred by cannula into a 1 liter round-bottomed flask equipped with a stir-bar. Hexane (200 ml) and THF (20 ml) were added to the remaining solids, the mixture again was centrifuged, and the supernatant liquid combined with the supernatant solution previously separated. Solvent was removed by trap-to-trap distillation until the volume of the residue was about 100 ml, and the remaining liquid was transferred by cannula into a weighed 250 ml round-bottomed flask. Remaining solvent was removed by trap-to-trap distillation at approximately 0.05 mm Hg (10 Pa) at room temperature to give 51.2 g (81%, 1.16 mol) of a cloudy white oil.

$^1H$ NMR (90 MHz, $C_6D_6$):$\delta$ 0.37 (broad, $SiCH_3$, 3.74H)
3.92 (broad, SiH, 1 H).

NMR integration of the product gave a constitution of $[(CH_3SiH)_{0.8}(CH_3Si)_{0.2}]_n$.

IR (thin film, $cm^{-1}$): 2967(s), 2900(s), 2800(w), 2099(vs), 1410(s), 1385(w), 1249(s), 1055(br), 933(s), 865(vs), 770(vs), 685(br), 650(sh), 585(w).

Molecular weight (cryoscopic in benzene): 600 g/mol.

Anal. (material from another similar preparation). Calcd. for $CSiH_{3.76}$; C, 27.39; H, 8.55; Si, 64.05. Found: C, 27.49; H, 8.98; Si, 61.58%.

TGA (25-1000 °C, 10 °C/min): 20% yield of a gray-black ceramic solid. Pyrolysis of a sample from another preparation in a tube furnace gave a gray-black ceramic solid in 36% yield (by weight).

Anal. of Ceramic. Found: C, 22.93; Si, 75.99%.

The pure liquid obtained by this procedure is very air-sensitive, particularly when its effective surface

area is high, as when in contact with a fritted funnel or a paper or cloth towel (in which cases spontaneous inflammation may occur).

Other, similar reactions have given 62-75% yields of $(CH_3SiH)_x(CH_3Si)_y$. Molecular weight determinations of several preparations ranged from 520-740 g/mol. All products had very similar $^1H$ NMR spectra, but with different $SiCH_3$:SiH ratios. Physical data of these products are listed in Table 1.

TABLE 1

| PHYSICAL DATA FOR $[(CH_3SiH)_x(CH_3Si)_y]_n$ POLYMERS | | | | | | |
|---|---|---|---|---|---|---|
| Sample # | Polymer Yield (%) | M.W.[a] | $SiCH_3$:SiH[b] | Ceramic[c] Yield (%) | x | y |
| YFY III-1 | 81 | 600 | 3.74:1 | 20 | 0.80 | 0.20 |
| YFY II-40 | 74 | 740 | 3.56:1 | 16 | 0.84 | 0.16 |
| YFY II-25 | 73 | 650 | 3.51:1 | 26 | 0.85 | 0.15 |
| YFY II-12 | 66 | 520 | 3.27:1 | 16 | 0.91 | 0.09 |
| YFY I-73 | 73 | 680 | 3.48:1 | 27 | 0.86 | 0.14 |

[a]Cryoscopic in benzene.
b $^1H$ NMR integration ratio.
[c]Under nitrogen gas, 25-1000 ° C, 10 ° C/min (TGA)

For the purpose of simplifying calculation, an average formula weight value 44 was assigned for the unit $(CH_3SiH)_x(CH_3Si)_y$. Therefore, in each of the following experiments, the number of moles of the reaction unit $(CH_3SiH)$ was calculated from the weight of the polymer used divided by 44.

The product formed in the THF solution gives a 60% ceramic yield, but it is of limited solubility in organic solvents and its conversion to ceramic fibers requires a curing step of photolysis/oxidation. Preparation of the $[(CH_3SiH)_x(CH_3Si)_y]_n$ in a hexane/THF mixture of approximately 6 to 7:1 resulted in satisfactory yields of a soluble product. However, pyrolysis of this material resulted in very low ceramic yields, ranging from 16 to 27%.

2. Characterization of the Polycarbosilane.

The polycarbosilane, a white solid, was purchased from Dow Corning Corporation. The following data were collected on it:

$^1H$ NMR (90 MHz, $C_6D_6$): $\delta$ 4.52 (broad SiH, 1H)
0.26 (broad $Si\underline{C}H_3$ and $SiCH_2Si$, 8.6H)

IR (KBr, Nujol, $cm^{-1}$): 2104(s), 1253(s), 1014(s, broad), 845(s, broad), 734(s).
Molecular Weight (cryoscopic in benzene): 1210 g/mol
TGA (25-1000°C, 10°C/min): 58% yield of a black ceramic solid.
$T_{1/2}$ = 510°C

C. Catalytic Reactions of $[(CH_3SiH)_x(CH_3Si)_y]_n$

1. Potassium Bis(trimethylsilyl)amide - Catalyzed Conversion of $[(CH_3SiH)_x(CH_3Si)_y]_n$

In a dry box, a 50 ml round-bottomed flask equipped with a stir-bar, a reflux condenser and a no-air rubber serum cap ("standard apparatus") was charged with 0.1 g of KH (0.0025 mol). THF (20 ml) was added to the flask to suspend the KH. To the KH suspension was added 0.44 g of $[(CH_3)_3Si]_2NH$ (0.0027 mol). Reaction occurred immediately with hydrogen gas evolution. The solution was stirred at room temperature for 20 minutes and then heated at reflux for 20 minutes. The slightly yellow solution was allowed to cool to room temperature.

Another 100 ml three-necked, round-bottomed flask equipped with a stir-bar, a reflux condenser and a no-air rubber serum cap was charged with 2.2 g of $[(CH_3SiH)_x(CH_3Si)_y]_n$ (0.05 mol, x = 0.85, y = 0.15). THF (20 ml) was added to the flask to dissolve the polymer. The $[(CH_3)_3Si]_2NK$ solution previously described was slowly added to the reaction flask by syringe. Addition of each drop resulted in formation of a transient orange color which quickly disappeared. The orange color persisted after 1 ml of the solution had been added. After 10 ml (ca. 2.5 mol%) of the solution of $[(CH_3)_3Si]_2NK$ had been added, the reaction mixture turned deep red and a small amount of white precipitate was present. $CH_3I$ (0.5 ml, 7.9 mmol) was

added, and the resulting solution was stirred at room temperature for one hour. The solvent was removed under reduced pressure to give a white solid which was extracted with two 50 ml portions of hexane. The extracts were centrifuged, and the clear, colorless supernatant layer was transferred via cannula into a weighed 100 ml round-bottomed flask equipped with a stir-bar. Solvent was removed by trap-to-trap distillation to give 1.51 g (68%, by weight) of a white powder ("usual work-up"). The reaction product is soluble in hexane, benzene, and THF.

$^1H$ NMR (90 MHz, $C_6D_6$): δ 4.2 (broad, SiH, 1 H)
0.47 (broad, $SiCH_3$, 8.8 H)

Molecular weight (cryoscopic in benzene): 1000 g/mol

TGA (25-1000 °C, 10 °C/min): 63% yield of a black ceramic solid, $T_{1/2}$ 300 °C[a]

[a]$T_{1/2}$ = temperature at which one-half of the total weight loss has occurred.

2. Potassium Bis(vinyldimethylsilyl)amide - Catalyzed Conversion of $[(CH_3SiH)_x(CH_3Si)_y]_n$

According to the procedure described previously, the reaction between 0.46 g (0.0025 mol) of $[(CH_2=CH)Si(CH_3)_2]_2NH$ and 0.1 g (0.0025 mol) of KH in 20 ml of THF was carried out under nitrogen. The resulting solution was added to a separate flask which was charged with 2.2 g (0.05 mol) of $[(CH_3SiH)_x(CH_3Si)_y]_n$ (x = 0.85, y = 0.15) and 20 ml of THF. After 9 ml (ca. 2.5 mol%) of the $[(CH_2=CH)Si(CH_3)_2]_2NK$ solution had been added, the deep red reaction mixture started to form small amounts of white precipitate. $CH_3I$ (0.5 ml, 7.9 mmol) was added and the resulting solution was stirred at room temperature for one hour. The usual work-up followed. A white powder (2.01 g, 91%) was obtained which is very soluble in hexane, benzene, and THF.

$^1H$ NMR (90 MHz, $C_6D_6$): δ 4.08 (broad, SiH, 1H)
0.47 (broad, $SiCH_3$, 12 H)

Molecular weight (cryscopic in benzene): 850 g/mol

TGA (25-1000 °C, 10 °C/min): 61% yield of black ceramic solid, $T_{1/2}$ = 400 °C.

3. Monopotassium Derivative of Hexamethylcyclotrisilazane - Catalyzed Conversion of $[(CH_3SiH)_x(CH_3Si)_y]_n$.

According to the procedure described previously, the reaction between 0.55 g (0.0025 mol) of $[(CH_3)_2SiNH]_3$ and 0.1 g (0.0025 mol) of KH in 20 ml of THF was carried out under nitrogen. The resulting solution was added to a separate flask which was charged with 2.2 g (0.05 mol) of $[(CH_3SiH)_x(CH_3Si)_y]_n$ (x = 0.85, y = 0.15) and 20 ml of THF. After 10 ml (ca. 2.5 mol%) of the potassium silylamide solution had been added, the reaction mixture turned deep red and a small amount of white solid precipitated. $CH_3I$ (0.5 ml, 7.9 mmol) was added, and the resulting solution was stirred at room temperature for one hour. Work-up as above followed. A white powder (1.95 g, 89%) was obtained. The reaction product is soluble in hexane, benzene, and THF.

$^1H$ NMR (90 MHz, $C_6D_6$): δ 4.60 (quartet, SiH, 0.7 H)
4.18 (broad, SiH, 1 H)
0.48 (broad, $SiCH_3$, 14 H)

Molecular weight (cryoscopic in benzene): 750 g/mol

TGA (25-1000 °C, 10 °C/min): 56% yield of a black ceramic solid, $T_{1/2}$ = 300 °C.

4. Monopotassium Derivative of sym-Trimethyltrivinylcyclotrisilazane- Catalyzed Conversion of $[(CH_3SiH)_x(CH_3Si)_y]_n$

Essentially the same procedures were used in the reaction of $[(CH_3)(CH_2=CH)SiNH]_3$ (0.66 g, 0.0025 mol) with KH (0.1 g, 0.0025 mol) in 20 ml of THF solution. The resulting solution was added to a 100 ml three-necked round-bottomed flask which was charged with 2.2 g (0.05 mol) of $[(CH_3SiH)_x(CH_3Si)_y]_n$ (x = 0.85, y = 0.15) and 40 ml of THF. After 6 ml (ca. 1.5 mol%) of the solution had been added, the deep red color of the reaction mixture persisted and a small amount of white solid precipitated. $CH_3I$ (0.5 ml, 7.9 mmol) was added, and the resulting solution was stirred at room temperature for one hour. Work-up as above followed. A white powder (1.79 g, 81.4%) was obtained. The reaction product is soluble in hexane, benzene and THF.

$^1H$ NMR (90 MHz, $C_6D_6$): δ 4.16 (broad, SiH, 1 H)
0.49 (broad, $SiCH_3$, 8.9 H)

Molecular weight (cryoscopic in benzene): 910 g/mol

TGA (25-1000 °C, 10 °C/min): 67% yield of a black ceramic solid, $T_{1/2}$ = 410 °C.

5. Potassium Piperidide - Catalyzed Conversion of $[(CH_3SiH)_x(CH_3Si)_y]_n$

In a dry box, a 50 ml round-bottomed flask equipped with a stir-bar, a reflux condenser and a no-air rubber serum cap was charged with 0.1 g of KH (0.0025 mol). THF (20 ml) was added to the flask to suspend the KH. To the KH suspension was added 0.25 ml of piperidine. Reaction occurred immediately with hydrogen gas evolution. The solution was stirred at room temperature for one hour and then heated at reflux for one hour. The slightly yellow solution was allowed to cool to room temperature.

Another 100 ml three-necked, round-bottomed flask equipped with a stir-bar, a reflux condenser and a no-air rubber serum cap was charged with 1.1 g of $[(CH_3SiH)_x(CH_3Si)_y]_n$ (0.025 mol, x = 0.8, y = 0.2). THF (20 ml) was added to the flask to dissolve the polymer. The potassium piperidide solution previously described was added slowly to the reaction flask by syringe. Addition of each drop resulted in formation of a transient orange color which quickly disappeared. The orange color persisted after 10 ml of the solution had been added. After 20 ml (ca. 10 mol%) of the solution of cyclo-$C_5H_{10}NK$ had been added, the reaction mixture was stirred at room temperature for one hour. The reaction solution turned deep red and a small amount of white precipitate was present. $CH_3I$ (0.5 ml, 7.9 mmol) was added, and the resulting solution was stirred at room temperature for one hour. The solvent was removed by trap-to-trap distillation at reduced pressure to give a white solid which was extracted with two 35 ml portions of hexane. The extracts were centrifuged, and the clear, colorless supernatant layer was transferred via cannula into a weighed 100 ml round-bottomed flask equipped with a stir-bar. Solvent was removed by trap-to-trap distillation to give 1.03 g (67%, by weight) of white powder which is soluble in hexane, benzene, and THF.

$^1H$ NMR (90 MHz, $C_6D_6$): $\delta$ 4.09 (broad, SiH, 1 H)
0.47 (broad, $SiCH_3$, 8.7 H)

Molecular weight (cryoscopic in benzene): 840 g/mol

TGA (25-1000 °C, 10 °C/min): 57% yield of a brownish-black ceramic solid $T_{1/2}$ = 350 °C.

6. Potassium n-Propylamide - Catalyzed Conversion of $[(CH_3SiH)_x(CH_3Si)_y]_n$

Essentially the same procedure was used in the reaction of 0.30 g (0.0025 mol) of n-$C_3H_7NH_2$ with 0.1 g (0.0025 mol) of KH in 20 ml of THF as that described in Section C.(5). In this case, 20 ml of the n-$C_3H_7NHK$ solution (ca. 10 mol%) was used to react with 1.1 g (0.025 mol) of $[(CH_3SiH)_x(CH_3Si)_y]_n$ (x = 0.8, y = 0.2) in 20 ml of THF. After the addition was completed, the reaction solution turned orange and was stirred at room temperature for one hour. The solution turned deep red and a small amount of white precipitate was present. $CH_3I$ (0.5 ml, 7.9 mmol) was added, and the resulting solution was stirred at room temperature for one hour. The usual work-up left 0.95 g (73% by weight) of a white solid which is soluble in hexane, benzene, and THF.

$^1H$ NMR (90 MHz, $C_6D_6$): $\delta$ 4.08 (broad, SiH, 1 H)
0.51 (broad, $SiCH_3$, 13.6 H)

Molecular weight (cryoscopic in benzene) : 840 g/mol

TGA (25-1000 °C, 10 °C/min): 57% yield of a brownish-black ceramic solid $T_{1/2}$ = 300 °C

7. Potassium Diisopropylamide - Catalyzed Conversion of $[(CH_3SiH)_x(CH_3Si)_y]_n$

Essentially the same procedure was used in the reaction of 0.30 g (0.0025 mol) of (iso-$C_3H_7)_2NH$ with 0.1 g (0.0025 mol) of KH in 20 ml of THF as that described in Section C.(5). In this case, 20 ml of the (iso-$C_3H_7)_2NK$ solution (ca. 10 mol%) was used to react with 1.1 g (0.025 mol) of $[(CH_3SiH)_x(CH_3Si)_y]_n$ (x = 0.8, y = 0.2) in the 20 ml of THF. After the addition was completed, the reaction solution turned orange and was stirred at room temperature for one hour. The solution turned deep red and a small amount of white precipitate was present. $CH_3I$ (0.5 ml, 7.9 mmol) was added, and the resulting solution was stirred at room temperature for one hour. Work-up as above left 1.03 g (79% by weight) of a white solid which is soluble in hexane, benzene, and THF.

$^1H$ NMR (90 MHz, $C_6D_6$): $\delta$ 3.99 (broad, SiH, 1 H)
0.47 (broad, $SiCH_3$, 8.7 H)

Molecular weight (cryoscopic in benzene): 750 g/mol

TGA (25-1000 °C, 10 °C/min): 34% yield of a brownish-black solid $T_{1/2}$ = 280 °C

D. "Graft Procedure"

1. Reactions of $[(CH_3SiHNH)_a(CH_3SiN)_b(CH_3SiHNK)_c]_m$Living Polymer with $[(CH_3SiH)_x$-

$(CH_3Si)_y]_n$

a. $[(CH_3SiH)_x(CH_3Si)_y]_n$ Prepared in 7:1 Hexane/THF

i. Using cyclo-$[CH_3SiHNH]_m$ Prepared in Diethyl Ether

The same general procedures were used for all of these reactions. In a dry box, a 250 ml round-bottomed flask equipped with a stir-bar, reflux condenser and a serum cap was charged with a weighed amount of KH (ca. 3.3 mol%) based on $(CH_3SiHNH)$). THF (100 ml) was added to suspend the KH. $(CH_3SiHNH)m$, prepared in ether solution, was added into the flask by syringe (a vigorous reaction occurred and a large amount of $H_2$ gas was evolved which was vented out of the flask through an oil bubbler. After the addition was finished, the reaction mixture was stirred at room temperature for 1 hour and then heated at reflux for 1 hour.

A separate 250 ml flask equipped with a septum, reflux condenser and stir-bar was charged with a weighed amount of $[(CH_3SiH)_x(CH_3Si)_y]_n$ ($x = 0.85$, $y = 0.15$). THF (60 ml) was added by syringe to give a clear, colorless solution. The living polymer solution previously described was cannulated slowly into the reaction flask. The resulting orange solution was stirred at room temperature for one hour and then heated at reflux for one hour. The reaction mixture was allowed to cool to room temperature and 0.5 ml (7.9 mmol) of $CH_3I$ was added and the volatiles were removed by trap-to-trap distillation. The product was treated with 200 ml of hexane and the insoluble residue removed by centrifugation. The hexane was removed from the supernatant solution by trap-to-trap distillation, leaving a white solid. Physical data for these reaction products are given in the Tables 3, 4, 5, and 6. All of these polymers are very soluble in hexane, benzene, and THF.

b. Using cyclo-$[CH_3SiHNH]_m$ Prepared in THF

According to the procedure described previously, the reactions between KH and $(CH_3SiHNH)_m$ - (prepared in THF solution) were carried out under nitrogen. The living polymer solution then was added to the THF solution of $[(CH_3SiH)_x(CH_3Si)_y]_n$ ($x = 0.8$, $y = 0.2$). The resulting orange solution was stirred at room temperature for one hour and then heated at reflux for one hour. The reaction mixture was allowed to cool to room temperature and 0.5 ml (7.9 mmol) of $CH_3I$ was added. Work-up as described in the previous experiment left a white solid. Physical data for these reaction products are given in the Tables 3, 4, 5, and 6.

TABLE 3

| PREPARATION OF THE MIXED POLYMERS | | | | | | |
|---|---|---|---|---|---|---|
| Sample # | YFY III-7 | YFY III-11 | YFY III-14 | YFY II-29 | YFY II-30 | YFY II-30-1 |
| Solvent for $(CH_3SiHNH)_m$ Preparation | THF | THF | THF | Ether | Ether | Ether |
| Weight of $[(CH_3SiH)_x(CH_3Si)_y]_n$ | 10.1 g | 6.6 g | 3.3 g | 2.4 g | 1.1 g | 2.2 g |
| Moles of $[(CH_3SiH)_x(CH_3Si)_y]_n$ (A) | 0.23 | 0.15 | 0.075 | 0.055 | 0.025 | 0.05 |
| Weight of $(CH_3SiHNH)_m$ | 8.85 g | 8.85 g | 8.85 g | 2.4 g | 2.08 g | 1.22 g |
| Moles of $(CH_3SiHNH)_m$ (B) | 0.15 | 0.15 | 0.15 | 0.041 | 0.035 | 0.021 |
| Mole Ratio A:B | 1.5:1 | 1:1 | 1:2 | 1.34:1 | 1:1.41 | 2.42:1 |
| Yield (%) | 85 | 88 | 87 | 90 | 95 | 88 |

TABLE 4

| CERAMIC YIELD AND MOLECULAR WEIGHT DATA OF MIXED POLYMERS | | | |
|---|---|---|---|
| Sample #[d] | Ceramic[a] Yield (%) | $T_{1/2}$[b] (C°) | Molcular[c] Weight(g/mol) |
| YFY III-7 | 74 | 420 | 1800 |
| YFY III-11 | 78 | 420 | 2600 |
| YFY III-14 | 83 | 560 | 2500 |
| YFY II-29 | 78 | 460 | 2000 |
| YFY II-30 | 78 | 470 | 2000 |
| YFY II-30-1 | 76 | 400 | 2000 |

[a]Under nitrogen, 25-1000°C, 10°C/min (TGA)
[b]Temperature at which 1/2 of total weight loss had occurred
[c]Cryoscopic in benzene
[d]For details of preparation, see Table 4

TABLE 5

| $^1H$ NMR SPECTRAL DATA[a] OF THE MIXED POLYMERS | | | | |
|---|---|---|---|---|
| Sample #[c] | ($CH_3SiHNH$) | ($CH_3SiH$) | ($CH_3SiHNH$) and $SiCH_3$ | Integration Ratio[b] |
| YFY III-7 | 5.12 (b)<br>4.67 (b) | 4.12 (b) | 1.56, 1.22, 0.88, 0.46 (b), 0.24 | 1:1:14.4 |
| YFY III-11 | 5.14 (b)<br>4.67 (b) | 4.07 (b) | 1.56, 1.22, 0.88, 0.41 (b), 0.24 | 1.75:1:7 |
| YFY III-14 | 5.19 (b)<br>4.71 (b) | 4.08 (b) | 1.55, 1.23, 0.89, 0.45 (b), 0.26 | 3:1:18 |
| YFY II-29 | 5.17 (b)<br>4.72 (b) | 4.05 (b)<br>3.56 (b) | 1.35, 0.52 (b), 0.27 | 2:1:14.6 |
| YFY II-30 | 5.17 (b)<br>4.71 (b) | 4.03 (b)<br>3.56 (b) | 1.41, 1.34, 1.22, 0.46 (b), 0.27 | 2.13:1:13.8 |
| YFY II-30-1 | 5.15 (b)<br>4.72 (b) | 4.12 (b)<br>3.57 (b) | 1.23, 0.46 (b) 0.26 | 1.9:1:16.1 |

[a]90 MHz, in $C_6D_6$, chemical shift in ppm.
[b]($CH_3SiHNH$)/($CH_3SiH$)/($CH_3Si$) + (NH) proton integration
[c]For details of preparation, see Table 4

TABLE 6

PROPOSED FORMULAS AND THEIR ANALYTICAL DATA FOR THE MIXED POLYMERS

Proposed Formula

$(CH_3SiH)_x(CH_3Si)_y(CH_3SiHNH)_a(CH_3SiN)_b$

| Sample #[f] | | Polymer[a] Anal. Calcd. | Polymer[a] Anal. Found | Total[g] Accounted For | Ceramic Anal. Found | Total Accounted For |
|---|---|---|---|---|---|---|
| YFY III-7 | x, 0.163 | C, 24.46 | C, 25.75 | 96.8 | C, 20.59 | 97.27[b] |
| | y, 0.437 | H, 7.11 | H, 7.69 | | H, 0.78 | |
| | a, 0.163 | Si, 57.02 | Si,53.42 | | Si, 62.79 | |
| | b, 0.238 | N, 11.41 | N, 9.94 | | N, 13.11 | |
| YFY III-11 | x, 0.116 | C, 23.78 | C, 24.79 | 98.49 | C, 19.28 | 101.0[c] |
| | y, 0.384 | H, 6.97 | H, 7.34 | | H, 0.99 | |
| | a, 0.203 | Si, 55.41 | Si,53.17 | | Si, 63.47 | |
| | b, 0.297 | N, 13.85 | N, 13.19 | | N, 17.26 | |
| YFY III-14 | x, 0.09 | C, 22.65 | C, 24.21 | 100.46 | C, 18.27 | 90.44 |
| | y, 0.24 | H, 6.85 | H, 7.85 | | H, 0.55 | |
| | a, 0.27 | Si, 52.81 | Si, 51.89 | | Si, 58.65 | |
| | b, 0.40 | N, 17.69 | N, 16.51 | | N, 12.97 | |
| YFY III-29 | x, 0.087 | C, 24.26 | C, 24.03 | 87.06 | C, 19.68 | 95.01[d] |
| | y, 0.482 | H, 6.94 | H, 7.97 | | H, 0.19 | |
| | a, 0.174 | Si, 56.56 | Si, 43.56 | | Si, 58.71 | |
| | b, 0.256 | N, 12.17 | N, 11.50 | | N 16.43 | |
| YFY III-30 | x, 0.112 | C, 22.73 | C, 24.56 | 90.53 | C, 17.31 | 95.39[e] |
| | y, 0.303 | H, 8.76 | H, 6.97 | | H, 0.20 | |
| | a, 0.239 | Si, 53.00 | Si, 44.56 | | Si, 57.87 | |
| | b, 0.346 | N, 15.50 | N, 14.44 | | N, 20.01 | |

| | | | | | | |
|---|---|---|---|---|---|---|
| YFY II-30-1 | x, 0.062 | C, 25.33 | C, 23.35 | 79.45 | C, 19.97 | 90.36 |
| | y, 0.646 | H, 6.98 | H, 6.88 | | H, 0.65 | |
| | a, 0.122 | Si, 59.06 | Si, 41.53 | | Si, 58.44 | |
| | b, 0.172 | N, 8.62 | N, 7.69 | | N, 11.30 | |

[a]Calculated on the basis of NMR integration

[b]Calcd. composition ($Si_3N_4$-1): $Si_3N_4$ + 6.6 SiC + 0.74 C
this represents only 2.2 % by weight free carbon

[c]Calcd. composition: $Si_3N_4$ + 4.4 SiC + 0.85 C
(equivalent to 3.1% by weight free carbon)

[d]Calcd. composition (assuming % Si is in error):
$Si_3N_4$ + 4.8 SiC + 0.84 C
(equivalent to 2.9% by weight free carbon)

[e]Calcd. composition (same assumption): $Si_3N_4$ + 3.3 SiC + 0.78C
(equivalent to 3.3% by weight free carbon)

[f]For details of preparation, see Table 4

[g]Analytical difficulties, probably due to formation of ceramic material

b. $[(CH_3SiH)_x(CH_3Si)_y]_n$ Prepared in THF i. Using cyclo-$[(CH_3SiHNH)]_m$ Prepared in Diethyl Ether

In a dry box, a 250 ml round-bottomed flask equipped with a stir-bar, reflux condenser and a serum cap was charged with 0.01 g (0.25 mmol) of KH. THF (100 ml) was added to suspend the KH. To the KH suspension, $(CH_3SiHNH)_m$ (1.57 g, 0.027 mol, prepared in ether solution), was added by syringe (a vigorous reaction occurred and a large amount of $H_2$ gas was evolved which was vented out of the flask through an oil bubbler). After the addition was finished, the reaction mixture was stirred at room temperature for 1 hour and then at reflux for 1 hour.

A separate flask equipped with a septum, reflux condenser and stir-bar was charged with 1.1 g (0.025 mol) of $[(CH_3SiH)_x(CH_3Si)_y]_n$ (x = 0.46, y = 0.54). THF (60 ml) was added by syringe to give a clear, colorless solution. The living polymer solution described above was cannulated slowly into the reaction flask. The resulting orange solution was stirred at room temperature for one hour and then heated at reflux for one hour. The reaction mixture was allowed to cool to room temperature and 0.5 ml (7.9 mmol) of $CH_3I$ was added and the solvent was removed by trap-to-trap distillation, leaving a white solid (2.5 g, 94% by weight). The reaction product is soluble in hexane, benzene, and THF.

$^1H$ NMR (90 MHz, $C_6D_6$) $\delta$ 5.20, 4.74 (broad, $SiCH_3HNH$, 1.25H)
4.07 (broad, $SiCH_3H$, 1H)
1.59,1.23 (broad, $SiCH_3HNH$, 1H)
0.46, 0.26 (broad, $SiCH_3$, 11 H)

Molecular weight (cryoscopic in benzene): 1700 g/mol
TGA (25-1000 ° C, 10 ° C/min): 76% yield of a black ceramic solid, $T_{1/2}$ = 400 ° C.

ii. Using cyclo-$[CH_3SiHNH]_m$Prepared in THF

According to the procedure described previously, the reactions between KH (0.1 g, 2.5 mmol) and $(CH_3SiHNH)_m$ (2.9 g, 0.051 mol, prepared in THF solution) were carried out under nitrogen. The living polymer solution then was added to the THF solution of $[(CH_3SiH)_x(CH_3Si)_y]_n$ (2.2 g, 0.05 mol, x = 0.46, y = 0.54). The resulting orange solution was stirred at room temperature for one hour and then heated at reflux for one hour. The reaction mixture was allowed to cool to room temperature and 0.5 ml (7.9 mmol) of $CH_3I$ was added. Work-up as described in the previous experiment left a white solid (4.65 g, 91% by weight). The reaction product is soluble in hexane, benzene, and THF.

$^1H$ NMR (90 MHz, $C_6D_6$): δ 5.15, 4.71 (broad,$SiCH_3HNH$, 2 H)
4.50, 3.93 (broad, $SiCH_3H$, 1 H)
1.58, 1.23 (broad, $SiCH_3HNH$, 1 H)
0.47, 0.25 (broad, $SiCH_3$,16 H)

Molecular weight (cryoscopic in benzene): 2700 g/mol
TGA (25-1000 ° C, 10 ° C/min): 80% yield of a black ceramic solid, $T_{1/2}$ = 420 ° C.

2. Reaction of Polymeric $[(C_6H_5SiH)]_n$with $[CH_3SiHNH)_a(CH_3SiN)_b(CH_3SiHNK)_c]_m$Living Polymer

Poly(phenylsilylene), $[C_6H_5SiH]_n$, molecular weight 860, was prepared by the method of Aitken, et al., J. Organomet. Chem., supra.

The polymeric silylamide was prepared by the usual method, in this case by adding 1.0 g (3.0 mmol) of cyclo-$(CH_3SiHNH)_m$ (mol. wt. 330), obtained by ammonolysis of $CH_3SiHCl_2$ indiethyl ether, to a suspension of 0.02 g (0.5 mmol) of KH in 10 ml of THF at room temperature. The mixture was stirred at room temperature for two hours. This solution then was added, under dry nitrogen, to 1.0 g of $(C_6H_5SiH)_x$ (1.2 mmol) in 20 ml of THF in a 100 ml three-necked flask equipped with reflux condenser topped with a nitrogen inlet tube, two rubber septa and a magnetic stir-bar, at room temperature. The reaction mixture turned orange upon addition of a few drops of the polysilylamide solution. (The final color was red.) After the reaction mixture had been stirred at room temperature for three days, 0.1 g of methyl iodide was added. One-half of the THF was removed in vacuo and 20 ml of hexane was added. Centrifugation gave a clear supernatant solution which was evaporated in vacuo to leave an off-white powder, 1.90 g (95% yield). Analysis: Found: C, 45.54; H, 6.08; N, 12.31; Si, 36.37%.

$^1H$ NMR ($C_6D_6$): δ 0.2-1.4 (broad, $SiCH_3$, 0.58H)
4.6-5.8 (broad, SiH, 0.16 H)
6.5-7.7 (broad, $SiC_6H_5$, 1H).

Molecular weight (cryoscopic in benzene): 1470 g/mol
TGA (25-1000 ° C, 10 ° /min): 78% yield of a black ceramic solid. Pyrolysis of a larger sample in a tube furnace to 1000 ° C gave a black ceramic solid in 74% yield.
Analysis: Found: C, 39.93; H, 0.54; N, 15.41; Si, 44.29%. From these data a composition 1 $Si_3N_4$ + 2.75 SiC + 9.4 C may be calculated.

A similar preparation in which the polysilylamide/poly(phenylsilylene) mole ratio used was 5 gave a soluble white powder, molecular weight 2360, as a product whose pyrolysis to 1000 ° C gave an 86% ceramic yield.

3. Reactions of $[(CH_3SiHNH)_a(CH_3SiN)_b(CH_3SiHNK)_c]_m$ Living Polymer with Polycarbosilane .

a. Using Cyclo-$(CH_3SiHNH)_m$Prepared in Diethyl Ether.

i. Polycarbosilane/$[CH_3SiHNH]_m$ in 1:1 weight ratio (III-37).

In a dry box, a 250 ml round-bottomed flask equiped with a stir-bar, reflux condenser and a serum cap was charged with 0.15 g (3.75 mmol) of KH (4.4 mol%, based on $(CH_3SiHNH)$). THF (50 ml) was added to suspend the KH. $(CH_3SiHNH)_m$ (5 g, 0.085 mol, in 80 ml of THF), prepared by $CH_3SiHCl_2$ ammonolysis in ether solution, was added into the flask by syringe. A vigorous reaction occurred and a large amount of $H_2$ gas was evolved which was vented out of the flask through an oil bubbler. After the addition was finished,

the reaction mixture was stirred at room temperature for 2 hours.

A separate 250 ml round-bottomed flask equipped with a septum, reflux condenser and stir-bar was charged with 5.0 g of polycarbosilane. THF (50 ml) was added by syringe to give a clear solution. The living polymer solution previously described was cannulated slowly into the reaction flask. The resulting clear solution was stirred at room temperature for two hours and then heated at reflux for 24 hours. The reaction mixture was allowed to cool to room temperature and 0.5 ml (7.9 mmol) of $CH_3I$ was added, the mixture was refluxed for 2 hours and the solvent was removed by trap-to-trap distillation. The product was extracted with 200 ml of hexane and the insoluble residue removed by centrifugation. The hexane was removed from the supernatant solution by trap-to-trap distillation, leaving 9.6 g (96% yield by weight) of a white solid. The polymer is very soluble in hexane, benzene, and THF.

$^1H$ NMR (90 MHz, $C_6D_6$): δ 5.02, 4.55 (broad, SiH, 1H)
1.56, 1.23, 0.88 ($SiCH_3NH$)
0.25, 0.18 (broad, $SiCH_3$, $SiCH_2$ 9.4H,
for the total area of $SiCH_3$
$SiCH_2$ and $SiCH_3NH$).

Molecular weight (cryoscopic in benzene): 1550 g/mol
TGA (25-1000°C, 10°C/min): 84% yield of a black ceramic solid.
$T_{1/2}$ = 640°C. ($T_{1/2}$ = temperature at which one-half of weight loss has occurred.)
Melting point (sealed capillary under vacuum): Does not melt at temperatures up to 320°C.

| | | |
|---|---|---|
| Analysis: | Found:<br>Total: | C, 32.00; H, 7.47; Si, 48.25; N, 11.87<br>99.59% |

Ceramic Analysis: Large scale pyrolysis of the sample under $N_2$ to give 77% yield of a black ceramic solid (25-1000°C, 10°/C/min).

| | |
|---|---|
| Found:<br>Total: | C, 25.54; H, 0.62; Si, 53.04; N, 15.55<br>94.75% |

Composition:1 SiC + 0.2 $Si_3N_4$ + 0.7C (equivalent to 10.5 weight % of free carbon)

ii. Polycarbosilane/$[CH_3SiHNH]_n$in 5:1 Weight Ratio (III-57).

According to the procedure described previously, the reaction between 0.05 g (1.25 mmol) KH and 1.0 g (0.017 mol) $(CH_3SiHNH)_m$ (prepared in ether solution) in 100 ml of THF was carried out under nitrogen. The living polymer solution then was added to the THF (50 ml) solution of the polycarbosilane (5.0 g). The resulting solution was stirred at room temperature for 16 hours. To the reaction mixture 0.5 ml (7.9 mmol) of $CH_3I$ was added and the mixture was refluxed for 2 hours. Work-up as described in the previous experiment left 5.8 g (97% yield by weight) of a white solid. The polymer is very soluble in hexane, benzene, and THF.

$^1H$ NMR (90 MHz, $C_6D_6$: δ 5.00, 4.55 (broad, SiH, 1H)
1.22, 0.88 ($SiCH_3NH$)
0.30 (broad, $SiCH_3$ and $SiCH_2$ 9H,
for the total area of $SiCH_3$,
$SICH_2$ and $SiCH_3NH$)

Molecular weight (cryoscopic in benzene): 1100 g/mol
TGA (25-1000°C, 10°C/min): 67% yield of a black ceramic solid.
$T_{1/2}$ = 520°C.
Melting point (sealed capillary under vacuum): Softens at 220°C, melts at 240°C (to a thick gum), no further change up to 300°C.

b. Using Cyclo-$(CH_3SiHNH)_m$Prepared in THF.

i. Polycarbosilane/$[CH_3SiHNH_m$in 1:1 weight ratio (III-39).

In a dry box, a 250 ml round-bottomed flask equipped with a stir-bar, reflux condenser and a serum cap was charged with 0.15 g (3.75 mmol) of KH (4.4 mol%, based on $(CH_3SiHNH)$). THF (50 ml) was added to

suspend the KH $(CH_3SiHNH)_m$ (5.0 g, 0.085 mol, in 80 ml of THF), prepared by ammonolysis of $CH_3SiHCl_2$ in THF solution, was added into the flask by syringe. A vigorous reaction occurred and a large amount of $H_2$ gas was evolved which was vented out of the flask through an oil bubbler. After the addition was finished, the reaction mixture was stirred at room temperature for 2 hours.

A separate 250 ml round-bottomed flask equipped with a septum, reflux condenser and stir-bar was charged with 5.0 g of polycarbosilane. THF (50 ml) was added by syringe to give a clear solution. The living polymer solution previously described was cannulated slowly into the reaction flask. The resulting solution was stirred at room temperature for two hours and then heated at reflux for 24 hours. The reaction mixture was allowed to cool to room temperature and 0.5 ml (7.9 mmol) of $CH_3I$ was added, the mixture was heated a few hours, and the solvent was removed by trap-to-trap distillation. The product was extracted with 200 ml of hexane and the insoluble residue removed by centrifugation. The hexane was removed from the supernatant solution by trap-to-trap distillation, leaving 9.7 g (97% yield by weight) of a white solid. The polymer is very soluble in hexane, benzene and THF.

$^1H$ NMR (90 MHz, $C_6D_6$) δ 5.33, 4.58 (broad, Si$\underline{H}$, 1H)
1.37, 1.25, 0.91 (SiC$\underline{H}_3$NH)
0.29, 0.22 (broad SiC$\underline{H}_3$, SiC$\underline{H}_2$, 9.9H, for the total area of SiC$\underline{H}_3$ SiC$\underline{H}_2$ and $SiCH_3N\underline{H}$).

Molecular weight (cryscopic in benzene): 2360 g/mol

TGA (25-1000°C, 10°C/min): 88% yield of a black ceramic solid $T_{1/2}$ = 670°C.

Melting point (sealed capillary under vacuum): Does not melt at temperatures up to 320°C.

| | | |
|---|---|---|
| Analysis: | Found:<br>Total: | C, 31.88; H, 7.52; Si, 49.16; N, 11.69<br>100.25% |

Ceramic Analysis: Large scale pyrolysis of the sample under argon gave an 80% yield of a black ceramic solid (25-1000°C, 10°C/min).

| | |
|---|---|
| Found:<br>Total: | C, 24.03; H, 0.77; Si, 60.72; N, 14.72<br>100.24% |

Composition: 1SiC + 0.2 $Si_3N_4$ + 0.45 C (equivalent to 7.5 weight % of free carbon)

ii. Polycarbosilane/$[CH_3SiHNH]_m$ in 5:1 Weight Ratio (III-59).

According to the procedure described previously, the reactions between 0.005 g (1.25 mmol) KH and 1.0 g (0.017 mol) $(CH_3SiHNH)_m$ (prepared in THF solution) in 100 ml of THF were carried out under nitrogen. The living polymer solution then was added to the THF (50 ml) solution of polycarbosilane (5.0 g). The resulting solution was stirred at room temperature overnight. To the reaction mixture 0.5 ml (7.9 mmol) of $CH_3I$ was added and the mixture was refluxed for 2 hours. Work-up as described in the previous experiment left 5.9 g (98% yield by weight) of a white solid. The polymer is very soluble in hexane, benzene, and THF.

1H NMR (90 MHz, $C_6D_6$): δ 5.07, 4.55 (broad Si$\underline{H}$, 1H)
1.24, 0.89 ($SiCH_3N\underline{H}$)
0.28 (broad, SiC$\underline{H}_3$, SiC$\underline{H}_2$ 7.5H, for the total area of SiC$\underline{H}_3$ SiC$\underline{H}_2$ and $SiCH_3N\underline{H}$).

Molecular weight (cryoscopic in benzene): 970 g/mol.

TGA (25-1000°C, 10°C/min): 64% yield of a black ceramic solid $T_{1/2}$ = 530°C.

Melting point (sealed capillary under vacuum): Softens at 240°C, melts at 265°C, no further change up to 300°C.

E. "In-Situ Procedure"

1. Reaction of a Mixture of Cyclic $[CH_3SiHNH]_m$ and $[(CH_3SiH)_x(CH_3Si)_y]_n$ with KH Catalyst

a. Using cyclo-$[(CH_3SiHNH)]_m$ Prepared in Diethyl Ether

In a dry box, a 250 ml round-bottomed flask equipped with a stir-bar, reflux condenser and a serum cap was charged with 0.10 g of KH (0.0025 mol). THF (50 ml) was added to suspend the KH. A separate 250 ml Schlenk flask was charged with 2.0 g of cyclic $(CH_3SiNHN)_m$ (0.034 mol), prepared by ammonolysis of $CH_3SiHCl_2$ in ether solution, and 2.2 g of $[(CH_3SiH)_x(CH_3Si)_y]_n$ (0.05 mol, x = 0.74, y = 0.26), and 100 ml of THF. The mixed polymer solution was transferred by cannula into the KH suspension. The reaction mixture gradually changed color to light orange and hydrogen gas was slowly evolved. The resulting solution was stirred at room temperature for 14 hours and then heated at reflux for 1 hour. The light orange color of the solution persisted. The reaction mixture was allowed to cool to room temperature and 0.5 ml (7.9 mmol) of $CH_3I$ was added. The solvent was removed by trap-to-trap distillation. The product was extracted with 200 ml of hexane and the insoluble residue removed by centrifugation.

The clear, colorless supernatant layer was transferred via cannula into a weighed 250 ml round-bottomed flask The hexane was removed by trap-to-trap distillation leaving 3.8 g (91% by weight) of a white powder. The latter is soluble in THF, benzene, and hexane.

$^1H$ NMR (90 MHz, $C_6D_6$):δ 5.19, 4.70, 3.97 (broad, SiH, 1 H)
1.30, 0.47, 0.26 (broad, $SiCH_3$ and NH 3.6 H)

Molecular weight (cryoscopic): 1650 g/mol

TGA (25-1000 °C, 10 °C/min): 62% yield of a black ceramic solid, $T_{1/2}$ = 380 °C.

| Anal. of Polymer Product: | Found: | C, 23.56; H, 7.37; N, 14.51 Si, 50.89% |
|---|---|---|

A sample of the ceramic product obtained in a tube furnace pyrolysis was analyzed:

| Found: | C, 19.30; Si, 57.94; | N, 19.58; 0, 2.05% |
|---|---|---|

From this analysis one may calculate a ceramic composition:

1 SiC + 0.37 $Si_3N_4$ + 0.68 C + 0.07 $SiO_2$

(equivalent to 7.9% by weight free carbon)

b. Using cyclo-$[CH_3SiHNH]_m$Prepared in THF

According to the procedure described above, the reaction between 0.1 g of KH (0.0025 mol), 2.0 g of cyclic $(CH_3SiHNH)_m$ (prepared in THF solution), and 2.2 g of $[(CH_3SiH)_x(CH_3Si)_y]_n$ (x = 0.74, y = 0.26) was carried out under nitrogen. The resulting reaction mixture also gradually changed color to light orange with slow evolution of hydrogen gas. The solution was stirred at room temperature for 14 hours and then 0.5 ml (7.9 mmol) of $CH_3I$ was added. Work-up as described in the previous experiment left a white, soluble solid (3.75 g, 89%).

$^1H$ NMR (90 MHz, $C_6D_6$):δ 5.13, 4.72, 3.98 (broad,SiH, 1 H)
1.29, 0.48, 0.26 (broad, $SiCH_3$ and NH, 3.7 H)

Molecular weight : 2750 g/mol

TGA (25-1000 °C, 10 °C/min): 73% yield of a black ceramic solid, $T_{1/2}$ = 360 °C.

| Anal. of Polymer Product: | Found: | C, 24.16; H, 7.14; N, 15.26; Si, 51.20% |
|---|---|---|

A sample of the ceramic product obtained in a tube furnace pyrolysis was analyzed:

| Found: | C, 19.81; Si, 58.14; | N, 19.77; O, 1.67 |
|---|---|---|

From this analysis one may calculate a ceramic composition:

1 SiC + 0.37 $Si_3N_4$ + 0.7 C + 0.05 $SiO_2$

(equivalent to 8.1% by weight free carbon)

2. Reactions of a Mixture of Cyclic $[CH_3SiHNH]_3$ and Polycarbosilane with KH Catalyst.

a. Using Cyclo-$[CH_3SiHNH]_m$ Prepared from Diethyl Ether.

i. Polycarbosilane/$[CH_3SiHNH]_m$ in 1:1 weight ratio (III-38).

In a dry box, a 250 ml round-bottomed flask equipped with a stir-bar, reflux condenser and a serum cap was charged with 0.15 g of KH (3.75 mmol). THF (50 ml) was added to suspend the KH. A separate 250 ml Schlenk flask was charged wtih 5.0 g of $(CH_3SiHNH)_m$ (0.085 mol), prepared in ether solution, and 5.0 g of polycarbosilane, and 150 ml of THF. The mixed polymer solution was transferred by cannula into the KH suspension in THF. The reaction mixture gradually turned clear and hydrogen gas slowly evolved. The resulting solution was stirred at room temperature for 2 hours and then heated at reflux for 24 hours. The reaction mixture was allowed to cool to room temperature and 0.5 ml (7.9 mmol) of $CH_3I$ was added and the mixture was heated for several hours. The solvent was removed by trap-to-trap distillation. The product was extracted with 200 ml of hexane and the insoluble residue removed by centrifugation. The clear, colorless supernatant layer was transferred via a cannula into a weighed 250 ml round-bottomed flask. The hexane was removed by trap-to-trap distillation leaving 9.7 g (97% yield by weight) of a white powder. The white powder is soluble in THF, benzene, and hexane.

$^1H$ NMR (90MHz, $C_6D_6$) $\delta$ 5.10, 4.55 (broad 5:H, 1H)
1.56, 1.22, 0.88 ($SiCH_3NH$)
0.26, 0.19, (broad $SiCH_3$, and $SiCH_2$ 9.1H, for total area of $SiCH_2$ and $SiCH_3NH$)

Molecular weight (cryoscopic in benzene): 2150 g/mol
TGA (25-1000°C, 10°C/min): 86% yield of a black ceramic solid $T_{1/2}$ = 670°C.
Melting point (sealed capillary under vacuum): Does not melt at temperatures up to 320°C.

| | | |
|---|---|---|
| Analysis: | Found:<br>Total: | C, 31.87; H, 7.55; Si, 48.93; N, 11.70<br>100.05% |

Ceramic Analysis: Large scale pyrolysis of the sample under $N_2$ to give 74% yield of a black ceramic solid (25-1000°C, 10°C/min).

| | |
|---|---|
| Found: | C, 24.79; H, 0.70; Si; 56.79; N, 15.80 |
| Total: | 97.38% |

Composition:1 SiC + 0.2 $Si_3N_4$ + 0.6 C (equivalent to 9.6 weight % of free carbon)

ii. Polycarbosilane/$[CH_3SiHNH]_m$ in 5:1 weight ratio (III-56).

According to the procedure described previously, the reactions between 0.05 g of KH (1.25 mmol), 1.0 g of $[CH_3SiHNH]_m$ (prepared in ether solution), and 5.0 g of polycarbosilane was carried out under nitrogen. The resulting reaction mixture also gradually turned clear with slow evolution of hydrogen gas. The solution was stirred at room temperature for 3 hours and then heated ar reflux for 2 hours. The solution was allowed to cool to room temperature and 0.5 ml (7.9 mmol) of $CH_3I$ was added and the mixture refluxed for several hours. Work-up as described in the previous experiment left a white solid (5.8 g, 97% yield by weight). The white powder is soluble in THF, benzene and hexane.

$^1H$ NMR (90 MHz, $C_6D_6$): $\delta$ 5.03, 4.54 (broad, SiH, 1H)
1.23, 0.88 ($SiCH_3NH$)
0.24 (broad, $SiCH_3$, and $SiCH_2$, 8.3H, for the total area of $SiCH_3$, $SiCH_2$ and $SiCH_3NH$).

Molecular weight (cryoscopic in benzene): 1670 g/mol.
TGA (25-1000°C, 10°C/min): 80% yield of a black ceramic solid $T_{1/2}$ = 610°C.
Melting point (sealed capillary under vacuum): Soften at 235°C, melts at 260°C, no further change up to 275°C.

b. Using Cyclo-$[CH_3SiHNH]_m$ Prepared from THF.

1. Polycarbosilane/$[CH_3SiHNH]_m$ in 1:1 weight ratio (III-40).

In a dry box, a 250 ml round-bottomed flask equipped with a stir-bar, reflux condenser and a serum cap was charged with 0.15 g of KH (3.75 mmol). THF (50 ml) was added to suspend the KH. A separate 250 ml Schlenk flask was charged with 5.0 g of $[CH_3SiHNH]_m$ (0.085 mol), prepared in THF solution, and 5.0 g of polycarbosilane, and 150 ml of THF. The mixed polymer solution was transferred by cannula into the KH suspension. The reaction mixture gradually turned clear and hydrogen gas slowly evolved. The resulting solution was stirred at room temperature for 24 hours and then 0.5 ml (7.9 mmol) of $CH_3I$ was added and the mixture was refluxed for 2 hours. The solvent was removed by trap-to-trap distillation. The product was extracted with 200 ml of hexane and the insoluble residue removed by centrifugation. The clear, colorless supernatant layer was transferred via a cannula into a weighed 250 ml round-bottomed flask. The hexane was removed by trap-to-trap distillation leaving 9.8 g (98% yield by weight) of a white powder. The white powder is soluble in THF, benzene, and hexane.

$^1H$ NMR (90 MHz, $C_6D_6$): $\delta$ 5.21, 4.57 (broad, SiH, 1H)
1.25 (broad, $SiCH_3NH$) 0.34, 0.30 (broad, $SiCH_3$, and $SiCH_2$, 8.8H, for the total area of $SiCH_3$, $SiCH_2$ and $SiCH_3NH$).

Molecular weight (cryoscopic in benzene): 2560 g/mol.
TGA (25-1000°C, 10°C/min): 86% yield of a black ceramic solid $T_{1/2}$ = 670°C.
Melting point (sealed capillary under vacuum): Does not melt at temperature up to 320°C.

| | | |
|---|---|---|
| Analysis: | Found:<br>Total: | C, 31.04; H, 7.36; Si, 50.16; N, 11.62<br>100.18% |

Ceramic Analysis: Large scale pyrolysis of the sample under argon gave a 78% yield of a black ceramic solid (25-1000°C, 10°C/min).

| | |
|---|---|
| Found:<br>Total: | C, 23.36; H, 0.85; Si, 59.95; N, 15.94<br>100.10%. |

Composition: 1SiC + 0.2 $Si_3N_4$ + 0.5 C (equivalent to 7.9 weight % of free carbon)

ii. Polycarbosilane/$[CH_3SiHNH]_3$ 5:1 weight ratio (III-58).

According to the procedure described previously, the reaction between 0.05 g of KH (1.25 mmol), 1.0 g of $[CH_3SiHNH]_m$ (prepared in THF solution), and 5.0 g of polycarbosilane was carried out under nitrogen. The resulting reaction mixture also gradually turned clear with slow evolution of hydrogen gas. The solution was stirred at room temperature for 14 hours and 0.5 ml (7.9 mmol) of $CH_3I$ was added and the mixture was refluxed for 2 hours. Work-up as described in the previous experiment left a white solid (5.9 g, 98% yield by weight). The white powder is soluble in THF, benzene, and hexane.

$^1H$ NMR (90 MHz, $C_6D_6$): $\delta$ 5.07,4.55 (broad, SiH 1H)
1.24, 0.88 ($SiCH_3NH$)
0.28 (broad $SiCH_3$, and $SiCH_2$, 8.1H, for the total area of $SiCH_3$, $SiCH_2$ and $SiCH_3NH$).

Molecular weight (cryoscopic in benzene): 1100 g/mol
TGA (25-1000°C, 10°C/min): 66% yield of a black ceramic solid $T_{1/2}$ = 530 °C.
Melting point (sealed capillary under vacuum): Softens at 240°C, melts at 260°C, no further change up to 275°C.

F. Reaction of the Organosilicon Compound with Partially Deprotonated Polymerization Product of Cyclo-$[(CH_3)_2SiNH]_m$.

1. Polymerization of Cyclo-$[(CH_3)_2SiNH]_m$.

A 100 ml, three-necked, round-bottomed flask equipped with a stir-bar, a thermometer, and two gas

inlet tubes was charged with 45.0 ml (41.4 g, 0.188 mol) of $[(CH_3)_2SiNH]_3$ and 2.07 g (0.052 mol, 5% by weight) of $NH_4Br$. After flushing the system with nitrogen, a constant stream of nitrogen was maintained. The reaction mixture was then heated at 160°C for 8 hours during which time $NH_3$ gas slowly evolved. The reaction mixture was allowed to cool to room temperature, and then dissolved in 300 ml of diethyl ether. The solution was cannulated into a 500 ml, three-necked, round-bottomed flask equipped with a cold condenser (dry ice-acetone) and two no-air rubber serum caps. The solution was cooled to 0°C. An excess of anhydrous ammonia was bubbled into the reaction mixture during about 1 hour. The reaction mixture was filtered with a Schlenk fritted filter. The solvent was removed by trap-to-trap distillation to leave a viscous oil. The latter was then distilled under reduced pressure (0.05 mmHg or 10 Pa) and the low boiling compounds (starting material and oligomers) were collected from 100°C to 250°C. A very viscous gum remained (20.2 g, 49% by weight).

$^1H$ NMR (90 MHz, $C_6D_6$): δ 0.42 (broad $SiCH_3$, 1H)
0.23 (broad, $Si\underline{CH_3}$, 1.2H)

Molecular weight (cryoscopic in benzene): 5100 g/mol.
TGA (25-1000°C, 10°C/min): 100% weight loss occurred at 630°C.

2. Reaction of Metallated Polymer from Section F.(1) with $[(CH_3SiH)_x(CH_3Si)_y]_n$(IV-40)

In a dry box, a 100 ml round-bottomed flask equipped with a stir-bar, reflux condenser and a serum cap was charged with 0.1 g (2.25 mmol) of KH (5% by weight). THF (10 ml) was added to suspend the KH. A solution of the polymer from L.a. (above) (2.0 g in 30 ml of THF) was added to the flask by cannulation. After the addition was finished, the reaction mixture was heated at reflux for 1.5 hours. The solution gradually turned clear while $H_2$ gas was slowly evolved.

A separate 100 ml round-bottomed flask equipped with a septum, reflux condenser and stir-bar was charged with 2.2 g of $[(CH_3SiH)_x(CH_3Si)_y]_n$ (x = 0.81, y = 0.19). THF (30 ml) was added by syringe to give a clear solution. The KH/polymer product solution of Section L.a. previously described was cannulated slowly into the raction flask. Addition of each drop resulted in formation of an orange color which quickly disappeared. To the resulting solution 0.5 ml (7.9 mmol) of $CH_3I$ was added and the solvent was removed by trap-to-trap distillation. The product was extracted with 80 ml of hexane and the insoluble residue removed by centrifugation. The hexane was removed from the supernatant solution by trap-to-trap distillation, leaving 3.6 g (89% yield by weight) of a white solid. The polymer is very soluble in hexane, benzene, and THF.

$^1H$ NMR (90 MHz, $C_6D_6$): δ 5.12, 4.68, 4.09 (broad Si$\underline{H}$, 1 H)
1.17 (broad, N$\underline{H}$) 0.47, 0.27 (broad, $Si\underline{CH_3}$, 17.5 H, for the total area of $SiCH_3$ and N$\underline{H}$)

Molecular weight (cryoscopic in benzene): 1500 g/mol
Pyrolysis of this polymer to 1000 °C left a black ceramic material.

3. Reaction of the Polycarbosilane with the Product of Section F.(1).

In a dry box, a 100 ml round-bottomed flask equipped with a stir-bar, reflux condenser and a serum cap was charged with 0.1 g (2.25 mmol) of KH (5% by weight). THF (10 ml) was added to suspend the KH. A solution of the polymer prepared in Section (a) above (2.0 g in 30 ml of THF) was added into the flask by cannulation. After the addition was finished, the reaction mixture was heated at reflux temperature for 2 hours. The solution gradually turned clear while $H_2$ gas slowly evolved, forming the polysilylamide.

A separate 100 ml round-bottomed flask equipped with a septum, reflux condenser and stir-bar was charged with 2.0 g of polycarbosilane. THF (30 ml) was added by syringe to give a clear solution. The polysilylamide solution was cannulated slowly into the reaction flask. The reaction mixture was then heated at reflux for 4 hours. The resulting yellow solution was treated with 0.5 ml (7.9 mmol) of $CH_3I$, the mixture was refluxed for 2 hours and the solvent was removed by trap-to-trap distillation. The product was extracted with 80 ml of hexane and the insoluble residue removed by centrifugation. The hexane was removed from the supernatant solution by trap-to-trap distillation, leaving 3.7 g (93% yield by weight) of a white solid. The polymer is very soluble in hexane, benzene, and THF.

$^1H$ NMR (90 MHz, $C_6D_6$): δ 4.60 (broad Si$\underline{H}$, 1H)
0.43, 0.33, 0.23, 0.16, 0.13, 0.11 (multiplet, $Si\underline{CH_3}$, $Si\underline{CH_2}$, and N$\underline{H}$, 13.8H, for the total area of $Si\underline{CH_3}$, $Si\underline{CH_2}$, and N$\underline{H}$).

Molecular weight (cryoscopic in benzene): 1570 g/mol.
Pyrolysis (to 1000°C) gave a black ceramic material.

G. Reactions of $[(CH_3SiHNH_a(CH_3SiN)_b\text{-}(CH_3SiHNK)_c]_m$ Living Polymer with Polycarbosilane $[(CH_3SiH)_x\text{-}(CH_3Si_y]_n$ Organopolysilane Mixtures.

1. Polycarbosilanbe/Organopolysilane/Polymeric Silylamide in 1:1:2 Weight Ratio.

a. Polycarbosilane/Polysilane Mixture Added to the Polymeric Silylamide Solution.

A 250 ml round-bottomed flask equipped with a stir-bar, reflux condensor and a serum cap was charged with 0.13 g (3.25 mmol) of KH (4.3 mol %, based on ($CH_3SiHNH$) unit). THF (50 ml) was added to suspend the KH. Then 5.15 g (0.088 mol of $CH_3SiHNH$ unit) of $(CH_3SiHNH)_m$oligomer (via ammonolysis of $CH_3SiHCl_2$ in the THF) in 75 ml of THF was added. A vigorous reaction occurred with brisk evolution of $H_2$. After the addition was completed, the reaction mixture was stirred at room temperature for 2 hours.

A separate 250 ml flask equipped as above was charged with 2.58 g of the polycarbosilane and 2.58 g of $[(CH_3SiH)_x(CH_3Si)_y]_n$ (liquid polysilane, prepared by sodium condensation of $CH_3SiHCl_2$ in 7:1 hexane/THF) and 50 ml of THF. To the resulting clear solution was added very slowly by cannula the polymeric silylamide solution prepared above. The resulting clear orange solution was stirred at room temperature for 2 hours and then at reflux for 24 hours. Subsequently, 0.5 ml of $CH_3I$ was added, the mixture was refluxed for 2 hours and then the solvent was removed at reduced pressure. To the residue was added 150 ml of hexane to extract the product. Centrifugation removed insoluble salts. The hexane extracts were evaporated at reduced pressure, leaving 9.12 g (89% yield, by weight) of a white solid which was found to be soluble in hexane, benzene and THF.

$^1H$ NMR (90 MHz, $CDCl_3$): $\delta$ 5.18, 4.67 (broad, Si$\underline{H}$, 1 H) 1.39, 1.22 ($SiCH_3N\underline{H}$)
0.48, 0.27 (broad, $SiC\underline{H}_3$ and $SiC\underline{H}_2$, 6.2H for total $SiC\underline{H}_3$, $SiC\underline{H}_2$ and $SiC\underline{H}_3NH$)

Molecular weight (cryoscopic in benzene): 1730 g/mol
TGA (25-1000°C, 10°C/min): 86% yield of a black ceramic solid,
$T_{1/2} = 630°C$

Melting point (sealed capillary under vacuum) : does not melt up to 300°C.

Ceramic analysis: Large scale pyrolysis of the sample under argon (25-1000°C, 10°C/min): 77% yield of a black ceramic solid.

b. Alternate Mode of Addition

A solution of $[CH_3SiHNH)_a(CH_3SiN)_b\text{-}(CH_3SiHNK)_c]_m$ (prepared by reaction of 0.12 g (3.0 mmol) of KH and 5.27 g (0.090 mol of ($CH_3SiHNH$) unit) of the $CH_3SiHCl_2$ ammonolysis product (prepared in THF) in 50 ml of THF was cannulated into a 250 ml flask containing 2.63 g of $[(CH_3SiH)_x(CH_3Si)_y]_n$ polysilane in 50 ml of THF. The resulting clear orange solution was stirred under nitrogen at room temperature for one hour. To this solution then was added 2.63 g of the polycarbosilane in 50 ml of THF. This reaction mixture was stirred at room temperature for 2 hours and at reflux for 24 hours. After addition of 0.5 ml of $CH_3I$, the further procedure followed as described in K.1.(a). The product polymer was a white, soluble solid (9.14 g, 87% yield).

$^1H$ NMR ($C_6D_6$): $\delta$ 5.19, 4.72 (broad Si$\underline{H}$ 1 H)
1.39, 0.98 ($SiCH_3N\underline{H}$)
0.27 (broad, $SiC\underline{H}_3$ and $SiC\underline{H}_2$, 5.4H for the total $SiC\underline{H}_3$, $SiC\underline{H}_2$ and $SiCH_3N\underline{H}$)

Molecular weight: 1790 g/mol
TGA (25-1000°C, 10°C/min): 85% yield of a black ceramic solid.

2. Same Components as in G.(1) in 1:1:1 Weight Ratio

A solution of the polymeric silylamide was prepared as described above (3.20 g of $CH_3SiHCl_2$ ammonolysis product, 0.1 g of KH in 100 ml of THF). This solution was added, under nitrogen with stirring, to a mixture of 3.02 g of the polycarbosilane and 3.08 g of the liquid $[(CH_3SiH)_x(CH_3Si)_y]_n$ polysilane in 50 ml of THF. The further procedure followed that described in G.(1)(a). The product polymer was isolated as a soluble white solid (8.40 g, 90% yield).

$^1H$ NMR ($C_6D_6$): $\delta$ 5.20, 4.81 (broad Si$\underline{H}$, 1H)
1.40 ($SiCH_3N\underline{H}$)
0.47, 0.27 (broad, $SiC\underline{H}_3$ and $SiC\underline{H}_2$, 6.3H for total $SiC\underline{H}_3$ $SiC\underline{H}_2$ and $SiCH_3N\underline{H}$)

Molecular weight: 970 g/mol

TGA (25-1000°C, 10°C/min): 84% yield of a black ceramic solid.
Melting point (sealed, evacuated capillary): softens at 310°C, melts 340-350°C.
Analysis found: C, 32.64; H, 7.83; N, 9.07; Si, 48.82.
Ceramic analysis: Large scale pyrolysis of sample under argon (25-1000°C): black ceramic in 72% yield.
Analysis found: C, 26.15; N, 12.37; Si, 61.48.
Composition: 1SiC + 0.14 $Si_3N_4$ + 0.43C.

3. Same Components as in G.(1) in 1:2:1 Weight Ratio

A solution of the polymeric silylamide was prepared as described in G.(1)(a) (3.0 g of $CH_3SiHCl_2$ ammonolysisproduct, 0.1 g of KH in 100 ml of THF). This solution was cannulated, slowly with stirring under nitrogen, to a mixture of 3.0 g of the polycarbosilane and 6.0 g of the $[(CH_3SiH)_x(CH_3Si)_y]_n$ liquid polysilane in 50 ml of THF. The further procedure followed that described in K.1.(a). The white, solid product polymer was obtained in 92% yield (11.1 g). It was found to be very soluble in hexane, benzene and THF.

$^1$H NMR ($C_6D_6$): $\delta$ 5.12, 4.79, 4.19(broad Si$\underline{H}$, 1H)
1.40 ($SiCH_3N\underline{H}$)
0.30, 0.25 (broad, $SiC\underline{H}_3$ and $SiC\underline{H}_2$, 3.9H for total $SiC\underline{H}_3$ $SiC\underline{H}_2$ and $SiCH_3N\underline{H}$)

Molecular weight: 615 g/mol.
TGA (25-1000°C, 10°C/min): 74% yield of a black solid. Melting point: (sealed evacuated capillary): softens at 230°C,
melts at 260-270°C.
Ceramic analysis: Large scale pyrolysis of sample under argon (25-1000°C); 74% yield of a black ceramic.

| | |
|---|---|
| Analysis found: | C, 26.60; N, 8.23; Si, 65.17. |
| Compositon: | 1SiC + 0.08 $Si_3N_4$ + 0.18 C. |

H. Physical Blends

1. Experiments with Polymer Blends

(a) $[(CH_3SiH)_x(CH_3Si)_y]_n/[(CH_3SiHNH)_a(CH_3SiN)_b(CH_3SiHCH_3)_c]_m$ Blend Prepared at Room Temperature

In a dry box, 1.1 g (0.025 mol) of $[(CH_3SiH)_x(CH_3Si)_y]_n$ (x = 0.46, y = 0.54) (THF preparation) and 1.45 g (0.025 mol) of $[(CH_3SiHNH)_{0.39}$ -$(CH_3SiH)_{0.61}]_m$ (THF preparation) were finely ground together. The TGA curve of the physical blend polymer was measured. TGA (25-1000 ° C, 10 ° C/min): 70% yield of a black ceramic solid. (average value of the two individual polymers)

(b) A Blend Heated Neat to 100 ° C

In a dry box, 1.1 g (0.025 mol) of $[(CH_3SiH)_x(CH_3Si)_y]_n$ (x = 0.46, y = 0.54) and 1.45 g (0.025 mol) of [-$(CH_3SiHNH)_{0.39}(CH_3SiN)_{0.61}]_m$ (THFpreparation) were finely ground together. The solid mixture was transferred to a 100 ml round-bottomed flask and then was heated in an oil bath at 100 ° C for 30 minutes. The heat-treated mixed polymer is insoluble in THF, benzene, and hexane. TGA (25-1000 ° C, 10 ° C/min): 67% yield of a black ceramic solid.

(c) A Blend Heated in Toluene at Reflux

The polymer mixture prepared as in the previous experiment was dissolved in 20 ml of toluene in a 50 ml three-necked, round-bottomed flask. The solution was heated in reflux for one hour. The solution gradually turned cloudy. Solvent was removed by trap-to-trap distillation to give a white powder which is insoluble in THF, benzene, and hexane. TGA (25-1000 ° C, 10 ° /min): 75% yield of a black ceramic solid.

2. Experiments with Physical Polymer Blends of Polycarbosilane and $[(CH_3SiHNH)_a(CH_3SiN_b(CH_3SiHNCH_3)_c]_m$.

a. Using $[(CH_3SiHNH)_a(CH_3SiN_b(CH_3SiHNCH_3)_c]_m$ Prepared in Ether Solution (IV-20).

i. At Room Temperature.

In a dry box, 1.0 g of polycarbosilane and 1.0 g of $[(CH_3SiHNH)_a(CH_3SiN)_b(CH_3SiHNCH_3)_c]_m$ were finely ground together. The TGA curve of the physical blend polymer was measured.
TGA (25-1000°C, 10°C/min): 76% of a black ceramic solid.

The solid polymer blend was then dissolved in hexane. The solvent was slowly removed by trap-to-trap distillation to give a homogeneous mixture. The TGA curve of the mixture was again measured.
TGA (25-1000°C, 10°C/min): 78% of a black ceramic solid.

ii. At Refluxing Toluene Temperature.

The mixed polymer prepared as in the previous experiment was dissolved in 10 ml of toluene and added to a 50 ml three-necked, round-bottomed flask. The solution was heated at reflux for 3 hours and the solution remained clear. Solvent was removed by trap-to-trap distillation to give a white powder which is soluble in THF, benzene, and hexane.
TGA (25-1000°C, 10°C/min): 79% of a black ceramic solid.

iii. A Blend Heated Neat at 200°C.

The polymer prepared as in the previous experiment was transferred to a 50 ml round-bottomed flask and was then heated in a sand bath at 200°C for 2 hours. The finely ground powder turned to a foamy solid at the end of heating. The heat-treated mixed polymer is insoluble in THF, benzene, and hexane.
TGA (25-1000°C, 20°C/min): 82% of a black ceramic solid.

Using the same general procedure as outlined above, the polymer blends between polycarbosilane with different quantities of $[(CH_3SiHNH)_a(CH_3SiN)_b(CH_3SiHNCH_3)_c]_m$ (ether preparation) were prepared. The ceramic yields of these polymer blends produced are tabulated in Table 7.

b. Using $[(CH_3SiHNH)_a(CH_3SiN_b(CH_3SiHNCH_3)_c]_m$ Prepared in THF Solution (IV-22).

i. At Room Temperature.

In a dry box, 1.0 g of polycarbosilane and 1.0 g of $[(CH_3SiHNH)a(CH_3SiN)_b(CH_3SiHNCH_3)_c]_m$ were finely ground together. The TGA curve of the physical blend polymer was measured.
TGA (25-1000°C, 10°C/min): 77% of a black ceramic solid.

The solid polymer blend then was dissolved in hexane. The solvent was slowly removed by trap-to-trap distillation to give a homogeneous mixture. The TGA curve of the mixture was again measured.
TGA (25-1000°C, 10°C/min): 80% of a black ceramic solid.

ii. At Refluxing Toluene Temperature.

The mixed polymer prepared as in the previous experiment was dissolved in 10 ml of toluene and added to a 50 ml three-necked, round-bottomed flask. The solution was heated at reflux for 3 hours and the solution remained clear. Solvent was removed by trap-to-trap distillation to give a white powder which is soluble in THF, benzene, and hexane.
TGA (25-1000°C, 10°C/min): 76% of a black ceramic solid.

iii. A Blend Heated Neat at 200°C.

The polymer blend prepared as in the previous experiment was transferred to a 100 ml round-bottomed flask and was then heated in a sand bath at 200°C for 2 hours. The heat- treated mixed polymer is insoluble in THF, benzene, and hexane.
TGA (25-1000°C, 10°C/min): 86% of a black ceramic solid.

Using the same general procedure as outlined above, the polymer blends between polycarbosilane with different quantities of $[(CH_3SiHNH)_a(CH_3SiN)_b(CH_3SiHNCH_3)_c]_m$ (THF preparation) were prepared. The ceramic yield of these polymer blends produced are tabulated in Table 7.

c. Ternary Blends

i. Mixed at Room Temperature

In a dry box, 2.0 g of the polycarbosilane, 2.0 g of the liquid $[(CH_3SiH)_x(CH_3Si)_y]_n$ organopolysilane and 4.0 g of the $[(CH_3SiHNH)_a(CH_3SiN)_b(CH_3SiHNCH_3)_c]_m$ polysilazane (prepared in THF solution) were combined to give a nonhomogeneous mixture which was dissolved in 40 ml of hexane. This solution was stirred at room temperature for one hour and

Table 7. TGA Ceramic Yield of Polymer Blends

| Sample | Average * (%) | Solid Mixture (%) | Hexane Solution (%) | Reflux in Toluene (%) | Heated Neat at 200°C (%) |
|---|---|---|---|---|---|
| A | 71 | 76 | 78 | 79 | 82 |
| B | 65 | 70 | 70 | 71 | -- |
| C | 70 | 77 | 80 | 76 | 86 |
| D | 65 | 70 | 71 | 71 | -- |

A: Polycarbosilane and $[(CH_3SiHNH)_a(CH_3SiN)_b(CH_3SiHNCH_3)_c]_m$ (ether preparation) in 1:1 weight ratio.

B: Polycarbosilane and $[(CH_3SiHNH)_a(CH_3SiN)_b(CH_3SiHNCH_3)_c]_m$ (ether preparation) in 3:1 weight ratio.

C: Polycarbosilane and $[(CH_3SiHNH)_a(CH_3SiN)_b(CH_3SiHNCH_3)_c]_m$ (THF preparation) in 1:1 weight ratio.

D: Polycarbosilane and $[(CH_3SiHNH)_a(CH_3SiN)_b(CH_3SiHNCH_3)_c]_m$ (THF preparation) in 3:1 weight ratio.

* Average of the ceramic yields obtained with the separate components.

then was evaporated at reduced pressure. A homogeneous white powder remained. This material was finely ground under nitrogen and examined by thermal analysis. TGA (25-1000°C, 10°C/min): 77% yield of a black ceramic.

ii. At Refluxing Toluene Temperature

The polymer mixture prepared in L.3.(a) was dissolved in 40 ml of toluene in a 100 ml flask equipped with a reflux condenser and a nitrogen inlet tube. The solution was heated at reflux under nitrogen for 3 hours. Subsequent removal of solvent at reduced pressure left a white powder which was soluble in hexane, benzene and THF. The powder was finely ground and examined by thermal analysis.
TGA (25-1000°C, 10°C/min): 76% yield of a black ceramic.

iii. Neat at 200°

In a dry box 4 g of the polymer blend prepared in H.(2)(c)(i) was charged into a 250 ml flask equipped with a reflux condenser and a nitrogen inlet tube. The flask was heated in a sand bath at 200°C for 2 hours. The resulting hard, solid product now was insoluble in hexane, benzene and THF. It was finely ground and examined by thermal analysis.
TGA (25-1000°C, 10°C/,min): 85% yield of a black ceramic.

I. Ceramic Preparations

1. Organopolysilane-derived Ceramic Preparations

a. Preparation of Ceramic Fibers

i. From Mixed Polymer Prepared as in Example D.(1)(a)(i)(a)

In a dry box, an approximately 1 g sample of the polymer was dissolved in toluene (ca. 10 ml). The solution was concentrated under vacuum until a fibrous, gummy material was obtained. Fibers approximately 1 foot long were pulled with a glass rod dipped into the gummy mass. The fibers were quickly placed in a fused silica crucible which was in turn placed in a quartz tube in a tube furnace and flushed with nitrogen. The polymer fibers then were pyrolyzed at 10 ° C/min to 1000 ° C. This produced black ceramic fibers.

ii. From Mixed Polymer Prepared as in Example D.(1)(b)(ii)(b)

The same procedure was used in preparation of polymer fibers in this polymer. The fibers were quickly placed in a fused silica crucible which was in turn placed in a quartz tube in a tube furnace and flushed with nitrogen. The polymer fibers then were pyrolyzed at 10 ° C/min to 1000 ° C. This produced black ceramic fibers.

b. Preparation of Ceramic Bars by Polymer Pyrolysis

The two organosilicon polymers used for these experiments were prepared as described earlier.

i. Mixed Polymer Prepared as in Example D.(1)(a)(ii)

The polymer (3.0 g) was loaded into a 3.9 cm x 1.3 cm x 3.7 cm rectangular steel die and uniaxially pressed at 5000 lbs. for 5 minutes. The polymer bar was then bagged and isostatically pressed at 40,000 psi for one minute. The sample was placed in a quartz tube in a tube furnace and pyrolyzed under nitrogen to 1000 ° C, heating at 10 ° C/min. A black, irregular-shaped foam product was obtained with a loss of 24% of the original weight.

ii. Mixed Polymer Prepared as in Example D.(1)(a)(ii)

The polymer bar (3.0 g) was prepared by the same procedures used in the preparation of polymer bar above. The polymer bar was placed in a quartz tube in a tube furnace and pyrolyzed under nitrogen to 1000 ° C, heating at 10 ° C/min. A black, irregular-shaped foam product was obtained with a loss of 26% of the original weight.

c. Preparation of SiC Powder Composites

1. Mixed Polymer Prepared as in Example D.(1)(a)(i)

In a dry box, 2.4 g of fine -SiC powder and 0.6 g (20% by weight) of mixed polymer were combined in a 100 ml round-bottomed flask. The flask was removed from the dry box, charged with 10 ml of toluene, and the ceramic powder was dispersed ultrasonically for one hour. The toluene was removed on a rotary evaporator and the ceramic powder/polymer residue was further dried under vacuum for about 30 minutes. The residue was removed from the flask and lightly ground in a mortar and pestle to produce a fine powder. The powder were loaded into a 3.9 cm x 1.3 cm x 3.7 cm rectangular steel die and uniaxially pressed at 5000 lbs for 5 minutes. The bar of ceramic powder was then bagged and isostatically pressed at 40,000 psi for one minute. The sample was placed in a quartz tube in a tube furnace and pyrolyzed under nitrogen to 1000 °C heating at 10 °C/min. A slightly shrunk ceramic product was formed with a loss of 6% of the original weight.

ii. Mixed Polymer Prepared as in Example D.(1)(a)(ii)

In a dry box, 2.4 g of fine -SiC powder and 0.6 g (20% by weight) of mixed polymer were combined in a 100 ml round-bottomed flask. The flask was removed from the dry box, charged with 10 ml of toluene, and the ceramic powder was dispersed ultrasonically for one hour. The toluene was removed on a rotary evaporator leaving a gray residue. The ceramic powder/polymer was further dried under vacuum for about 30 minutes. The residue was removed from the flask and lightly ground with a mortar and pestle to produce a fine powder. The powder were loaded into a 3.9 cm x 1.3 cm x 3.7 cm rectangular steel die and uniaxially pressed at 5000 lbs for 5 minutes. The bar of ceramic powder was then bagged and isostatically pressed at 40,000 psi for one minute. The sample was placed in a quartz tube in a tube furnace and pyrolyzed under nitrogen to 1000 °C, heating at 10 °C/min. A slightly shrunk ceramic product was formed with a loss of 6% of the original weight.

2. Polycarbosilane-derived Ceramic

a. Preparation of Ceramic Fibers.

i. From Mixed Polymer Prepared as in D.(3)(a)(i)

In a dry box, approximately 1 g of sample III-37 was dissolved in toluene (ca. 10 ml). The solution was concentrated under vacuum until a fibrous, gummy material was obtained. Fibers approximately 1 ft long were pulled with a glass rod dipped into the gummy solid. The fibers were quickly placed in a fused silica crucible which was in turn placed in a quartz tube furnace and flushed with argon. The polymer fibers then were converted into ceramics by pyrolyzing them at 10°C/min to 1000°C. This produced black ceramic fibers. SEM micrographs of the ceramic fibers were obtained.

ii. From Mixed Polymer Prepared as in D.(4)(a)(i)

In a dry box, approximately 1 g of sample III-39 was dissolved in toluene (ca. 10 ml). The solution was concentrated under vacuum until a fibrous, gummy material was obtained. Fibers approximately 1 ft long were pulled with a glass rod dipped into the gummy solid. The fibers were quickly placed in a fused silica crucible which was in turn placed in a quartz tube furnace and flushed with argon. The polymer fibers then were converted into ceramics by pyrolyzing them at 10°C/min to 1000°C.
This produced black ceramic fibers. SEM micrographs of the ceramic fibers were obtained.

iii. From Mixed Polymer Prepared as in D.(3)(a)(i).

In a dry box, approximately 1 g of sample III-40 was dissolved in toluene (ca. 10 ml). The solution was concentrated under vacuum until a fibrous, gummy material was obtained. Fibers approximately 1 ft long were pulled with a glass rod dipped into the gummy solid. The fibers were quickly placed in a fused silica crucible which was in turn placed in a quartz tube furnace and flushed with argon. The polymer fibers then were converted into ceramics by pyrolyzing them at 10°C/min to 1000°C. This produced black ceramic fibers. SEM micrographs of the ceramic fibers were obtained.

b. Preparation of Ceramic Bars.

i. From Mixed Polymer Prepared as in D.(3)(a)(i).

The polymer (III-37, 2.28 g) was loaded into a 3.9 cm x 1.3 cm x 3.7 cm rectangular steel die and uniaxially pressed at 5000 lbs for 5 minutes. The polymer bar was then bagged and isostatically pressed at 40,000 psi for one minute. The sample was placed in the quartz tube furnace and pyrolyzed under argon to 1000°C, heating at 10°C/min. A black, rectangular-shaped bar was obtained with a loss of 32% of the original weight. SEM micrographs of the ceramic bar was obtained.

ii. From Mixed Polymer Prepared as in D.(3)(b)(i).

The polymer (III-38, 2.57 g) was loaded into a 3.9 cm x 1.3 cm x 3.7 cm rectangular steel die and uniaxially pressed at 5000 lbs for 5 minutes. The polymer bar was then bagged and isostatically pressed at 40,000 psi for one minute. The sample was placed in the quartz tube furnace and pyrolyzed under argon to 1000°C, heating at 10°C/min. A black, rectangular shaped bar was obtained with a loss of 29% of the original weight. SEM micrographs of the ceramic bar was obtained.

iii. From Mixed Polymer Prepared as in E.(2)(a)(i).

The polymer (III-39, 2.36 g) was loaded into a 3.9 cm x 1.3 cm x 3.7 cm rectangular steel die and uniaxially pressed at 5000 lbs for 5 minutes. The polymer bar was then bagged and isostatically pressed at 40,000 psi for one minute. The sample was placed in the quartz tube furnace and pyrolyzed under argon to 1000°C, heating at 10°C/min. A black, rectangular shaped bar was obtained with a loss of 27% of the original weight. SEM micrographs of the ceramic bar was obtained.

iv. From Mixed Polymer Prepared as in E.(2)(b)(i).

The polymer (III-40, 2.07 g) was loaded into a 3.9 cm x 1.3 cm x 3.7 cm rectangular steel die and uniaxially pressed at 5000 lbs for 5 minutes. The polymer bar was then bagged and isostatically pressed at 40,000 psi for one minute. The sample was placed in the quartz tube furnace and pyrolyzed under argon to 1000°C, heating at 10°C/min. A black, rectangular shaped bar was obtained with a loss of 24% of the original weight. SEM micrographs of the ceramic bar was obtained.

## Claims

**1.** A method for preparing preceramic organosilicon polymers, wherein the method comprises:
(a) mixing an organosilicon polymer containing Si-H units with at least a catalytic amount of an organic metal amide or a silylamide in an organic solvent;
(b) allowing the mixture of step (a) to react at room temperature or above; and
(c) quenching the reaction mixture with a reactive electrophile, thereby forming said preceramic organosilicon polymer.

**2.** A method for preparing a preceramic organosilicon polymer, wherein the method comprises:
(a) generating a polysilylamide in the presence of an Si-H containing organosilicon polymer wherein the polysilylamide is generated by reacting the ammonolysis product of an $R^1SiHX_2$ (where $R^1$ is a lower alkyl group having from 1 to about 6 carbon atoms, a substituted or unsubstituted alkenyl group having from 2 to about 6 carbon atoms, a substituted or unsubstituted lower aryl group having from 6 to about 10 carbon atoms, a tri(lower)alkyl- or di(lower)alkylsilyl group or a di(lower)-alkylamino group and X is a halogen), in the presence of a basic catalyst capable of deprotonating the hydrogen from a nitrogen atom adjacent to a silicon atom to generate the polysilylamide in situ;
(b) allowing the in situ generated polysilylamide and the Si-H containing organosilicon polymer sufficient time to react with each other at room temperature; and
(c) quenching the mixture with an organic halide or halosilane to produce the organosilicon preceramic polymer.

**3.** The method of claim 1, wherein the silylamide is an alkali or alkaline earth metal silylamide.

**4.** The method of claim 3 wherein the metal silylamide is a polymeric metal silylamide of the formula $[-(R^1SiHNH)_a(R^1SiN)_b(R^1SiHNM)_c]_m$, where a + b + c = 1, $R^1$ is a lower alkyl group having from 1 to about 6 carbon atoms, a substituted or unsubstituted cycloalkyl group having from 3 to about 6 carbon atoms, a substituted or unsubsituted alkenyl group having from 2 to about 6 carbon atoms, a

substituted or unsubsituted lower aryl group having from 6 to about 10 carbon atoms, a tri(lower)alkyl- or di(lower)alkylsilyl group or a di(lower)alkylamino group; M is an alkali metal or one-half equivalent of an alkaline earth metal; and m is an integer greater than 1.

**5.** The method of claim 4 wherein the reaction mixture is quenched with an electrophile, E-X, where E is selected from the group consisting of alkyl groups having 1 to 6 carbon atoms and silyl groups and X is selected from the group consisting of halogen, sulfate and sulfonate.

**6.** The method of claim 4 wherein the Si-H containing organosilicon polymer is organopolysilane, and the polymeric metal silylamide is added in a sufficient quantity so that the excess carbon obtained on pyrolysis of the silylamide can react with excess silicon from the pyrolysis of the organopolysilane compound, thus producing a ceramic product which contains substantially no free silicon or free carbon.

**7.** The method of claim 4 wherein $R^1$ is a lower alkyl group.

**8.** The method of claim 7 wherein the polymeric metal silylamide has the formula $[(CH_3SiHNH)_a-(CH_3SiN)_b-(CH_3SiHNK)_c]_m$.

**9.** The method of claim 6 wherein the mole ratio of organopolysilane to polymeric metal silylamide ranges from about 4:1 to about 1:4.

**10.** The method of claim 3 wherein the metal silylamide is $[R^2R^3R^4Si]_2NM$ wherein $R^2$, $R^3$ and $R^4$ are each a lower alkyl group having from 1 to about 6 carbon atoms, a lower alkoxy group having from 1 to about 6 carbon atoms, a substituted or unsubstituted vinyl group, a substituted or unsubsituted allyl group, a substituted or unsubsituted lower aryl group having from 6 to about 10 carbon atoms, a tri-(lower)alkyl- or di(lower)alkylsilyl group or a di(lower)alkylamino group, $R^2$, $R^3$ and $R^4$ may be the same or different; and M is an alkali metal or one-half equivalent of an alkaline earth metal.

**11.** The method of claim 10 wherein $[R^2R^3R^4Si]_2NM$ is selected from $[(CH_3)_2(CH_2=CH)Si]_2NM$ and $[(CH_3)_3Si]_2NM$.

**12.** The method of claim 3 wherein the metal silylamide is partially deprotonated cyclo-$[R^5R^6SiNH]_m$ containing $[R^5R^6SiNM]$ units wherein $R^5$ and $R^6$ are each a lower alkyl group having from 1 to about 6 carbon atoms, a lower alkoxy group having from 1 to about 6 carbon atoms, a substituted or unsubstituted vinyl group, a substituted or unsubsituted allyl group, a substituted or unsubstituted lower aryl group having from 6 to about 10 carbon atoms, a tri(lower)alkyl- or di(lower)alkylsilyl group or a di-(lower)alkylamino group, $R^5$ and $R^6$ may be the same or different; M is an alkali metal or one-half equivalent of an alkaline earth metal and m is an integer greater than 1.

**13.** The method of claim 12 wherein cyclo-$[R^5R^6SiNH]_m$ is either cyclo-$[(CH_3)_2SiNH]_m$ or cyclo-$[(CH_3)(CH_2=CH)SiN]_m$.

**14.** The method of claim 1 wherein the silylamide is a diorganocyclopolysilazane that is either partially or completely ring-opened.

**15.** The method of claim 14 where the diorganocyclopolysilazane comprises units having the formula $[R^1R^{11}SiNH]_m$ where $R^1$ is a lower alkyl group having from 1 to about 6 carbon atoms, a substituted or unsubstituted alkenyl group having from 2 to about 6 carbon atoms, a substituted or unsubstituted lower aryl group having from 6 to about 10 carbon atoms, a tri(lower)alkyl- or di(lower)alkylsilyl group or a di(lower)alkylamino group; $R^{11}$ is defined as $R^1$, and may be the same or different, and m is an integer greater than 1.

**16.** The method of claim 1 wherein the organic metal amide is selected from potassium piperidide, potassium-ethylamide, potassium diisopropylamide, corresponding lithium, sodium, nisidium or cesium derivatives, or polymeric secondary amines partially deprotonated by a strong base and containing metal amide functions.

**17.** The method of any of claims 1 to 13 wherein the Si-H containing organosilicon polymer is either an organopolysilane of the formula $[(RSiH)_x(RSi)_y]_n$, where $x + y = 1$, R is a lower alkyl group having from 1 to about 6 carbon atoms, a lower alkenyl group having 2 to about 6 carbon atoms, a substituted or unsubstituted lower aryl group having from 6 to about 10 carbon atoms, or a tri(lower)alkyl- or di(lower)-alkylsilyl group), and n is an integer greater than 1; or a polycarbosilane having a plurality of repeat units of the formula $[R^aSi(H)\text{-}(CH_2)_q]$ where $R^a$ is H, a lower alkyl group having from 1 to about 6 carbon atoms, a cycloalkyl group having 3 to about 6 carbon atoms, a substituted or unsubstituted lower aryl group having from 6 to about 10 carbon atoms, and q is an integer 1 or greater.

**18.** The method of claim 17 wherein the polycarbosilane contains at least about 25 mole % of repeat units of the formula $[R^aSi(H)\text{-}(CH_2)_q]$.

**19.** The method of claim 17 wherein R and $R^a$ are a lower alkyl group.

**20.** The method of claim 19 wherein R and $R^a$ are $CH_3$.

**21.** The method of claim 17 wherein the Si-H containing organosilicon polymer is an organopolysilane and $x = 1$, $y = 0$.

**22.** The method of claim 17 as dependent on claim 1 wherein the Si-H containing organosilicon polymer is a polycarbosilane and the weight ratio of polycarbosilane:silylamide is about 10:1 or less.

**23.** The method of claim 17 as dependent on claim 4 wherein the Si-H containing organosilicon polymer is a mixture of the polycarbosilane and the organopolysilane, with a sufficient quantity of the organopolysilane added so that the excess silicon obtained on pyrolysis of the organopolysilane can react with excess carbon from the pyrolysis of the polycarbosilane and the silylamide, thereby reducing the amount of free carbon.

**24.** The method of claim 17 as dependent on claim 2 wherein the Si-H containing organosilicon polymer is organopolysilane, and the organopolysilane is added in a sufficient quantity so that the excess carbon obtained on pyrolysis of the silylamide can react with excess silicon from the pyrolysis of the organopolysilane compound, thus producing a ceramic product which contains substantially no free silicon or free carbon.

**25.** The method of claim 17 as dependent on claim 2 wherein the mole ratio of organopolysilane to in situ generated silylamide ranges from about 4:1 to about 1:4.

**26.** The method of claim 17 as dependent on claim 2 wherein the Si-H containing organosilicon polymer is a mixture of the polycarbosilane and the organopolysilane, with a sufficient quantity of the organopolysilane added so that the excess silicon obtained on pyrolysis of the organopolysilane can react with excess carbon from the pyrolysis of the polycarbosilane and the in situ generated silylamide, thereby reducing the amount of free carbon.

**27.** The method of claim 17 as dependent on claim 2 or claim 6 wherein the mixture is allowed to react by stirring at room temperature, then heating at reflux.

**28.** The method of claim 17 as dependent on claim 2 or claim 6 wherein the preceramic polymer is pyrolyzed under an inert atmosphere to form a ceramic material.

## Patentansprüche

**1.** Verfahren zur Bildung präkeramischer Organosiliziumpolymere, umfassend
(a) das Mischen eines Si-H-Einheiten enthaltenden Organosiliziumpolymers mit Wenigstens einer katalytischen Menge eines organischen Metallamids oder Sylilamids in einem organischen Lösungsmittel;
(b) das Reagierenlassen der Mischung nach Schritt (a) bei Raumtemperatur oder höherer Temperatur; und
(c) das Umsetzen der Reaktionsmischung mit einem reaktiven Elektrophil, um dadurch das präkeramische Organosiliziumpolymer zu bilden.

**2.** Verfahren zur Bildung eines präkeramischen Organosiliziumpolymers, umfassend
(a) die Erzeugung eines Polysilylamids in Anwesenheit eines Si-H enthaltenden Organosiliziumpolymers, wobei das Polysilylamid durch Umsetzen des Ammonolyseprodukts eines $R^1SiHX_2$ (wobei $R^1$ eine niedrige Alkylgruppe mit 1 bis 6 Kohlenstoffatomen, eine substituierte oder unsubstituierte Alkenylgruppe mit 2 bis etwa 6 Kohlenstoffatomen, eine substituierte oder unsubstituierte niedrige Arylgruppe mit 6 bis etwa 10 Kohlenstoffatomen, eine Tri-(niedrige)-Alkyl- oder Di-(niedrige)-Alkylsilylgruppe oder eine Di-(niedrige)-Alkylaminogruppe und X ein Halogen ist) in Anwesenheit eines basischen Katalysators erzeugt wird, der in der Lage ist, dem Wasserstoff eines einem Siliziumatom benachbarten Stickstoffatoms ein Proton zu entziehen, um das Polysilylamid in situ zu erzeugen;
(b) das Einräumen einer ausreichenden Zeitspanne, um das in situ erzeugte Polysilylamid und das Si-H enthaltende Organosiliziumpolymer bei Raumtemperatur reagieren zu lassen; und
(c) das Umsetzen der Mischung mit einem organischen Halogenid oder Halosilan, um das präkeramische Organosiliziumpolymer herzustellen.

**3.** Verfahren nach Anspruch 1,
wobei das Silylamid ein Alkali- oder Erdalkalimetall-Silylamid ist.

**4.** Verfahren nach Anspruch 3,
wobei das Metallsilylamid ein polymeres Metallsilylamid mit der Formel $[(R^1SiHNH)a(R^1SiN)b-(R^1SiHNM)c]m$ ist, wobei $a + b + c = 1$, $R^1$ eine niedrige Alkylgruppe mit 1 bis etwa 6 Kohlenstoffatomen, eine substituierte oder unsubstituierte Cycloalkylgruppe mit 3 bis etwa 6 Kohlenstoffatomen, eine substituierte oder unsubstituierte Alkenylgruppe mit 2 bis etwa 6 Kohlenstoffatomen, eine substituierte oder unsubstituierte niedrige Arylgruppe mit 6 bis etwa 10 Kohlenstoffatomen, eine Tri-(niedrige)-Alkyl oder Di-(niedrige)-Alkylsilylgruppe oder eine Di-(niedrige)-Alkylaminogruppe, M ein Alkalimetall oder ein halbes Äquivalent eines Erdalkalimetalles und m eine ganze Zahl größer als 1 ist.

**5.** Verfahren nach Anspruch 4,
wobei die Reaktionsmischung mit einem Elektrophil E-X umgesetzt wird, wobei E ausgewählt ist aus einer Gruppe bestehend aus Alkylgruppen mit 1 bis 6 Kohlenstoffatomen und Silylgruppen, und X ausgewählt ist aus einer aus Halogen, Sulfat und Sulfonat bestehenden Gruppe.

**6.** Verfahren nach Anspruch 4,
wobei das Si-H enthaltende Organosiliziumpolymer Organopolysilan ist und das polymere Metallsilylamid in ausreichender Menge zugegeben wird, so daß aus der Pyrolyse des Silylamides erhaltener überschüssiger Kohlenstoff mit überschüssigem Silizium aus der Pyrolyse der Organopolysilanverbindung reagieren kann und so ein keramisches Produkt hergestellt wird, das im wesentlichen keinen freien Kohlenstoff und kein freies Silizium enthält.

**7.** Verfahren nach Anspruch 4,
wobei $R^1$ eine niedrige Alkylgruppe ist.

**8.** Verfahren nach Anspruch 7,
wobei das polymere Metallsilylamid die Formel $[(CH_3SiHNH)a\ (CH_3SiN)b-(CH_3SiHNK)c]m$ hat.

**9.** Verfahren nach Anspruch 6,
wobei das Molverhältnis von Organopolysilan zu polymerem Metallsilylamid im Bereich von etwa 4:1 bis 1:4 liegt.

**10.** Verfahren nach Anspruch 3,
wobei das Metallsilylamid $[R^2R^3R^4Si]_2NM$ ist, wobei $R^2$, $R^3$ und $R^4$ jeweils niedrige Alkylgruppen mit 1 bis etwa 6 Kohlenstoffatomen, eine niedrige Alkoxygruppe mit 1 bis etwa 6 Kohlenstoffatomen, eine substituierte oder unsubstituierte Vinylgruppe, eine substituierte oder unsubstituierte Allylgruppe, eine substituierte oder unsubstituierte niedrige Arylgruppe mit 6 bis etwa 10 Kohlenstoffatomen, eine Tri-(niedrige)-Alkyl- oder Di-(niedrige)-Alkylsilylgruppe oder eine Di-(niedrige)-Alkylaminogruppe sind und $R^2$, $R^3$ und $R^4$ gleich oder verschieden sein können, und M ein Alkalimetall oder ein halbes Äquivalent

eines Erdalkalimetalles ist.

**11.** Verfahren nach Anspruch 10,
wobei $[R^2R^3R^4Si]_2NM$ ausgewählt ist aus $[(CH_3)_2(CH_2=CH)Si]_2NM$ und $[(CH_3)_3Si]_2NM$.

**12.** Verfahren nach Anspruch 3,
wobei das Metallsilylamid teilweise deprotoniertes Cyclo$[R^5R^6SiNH]m$ ist, das $[R^5R^6SiNM]$-Einheiten enthält, wobei $R^5$ und $R^6$ jeweils niedrige Alkylgruppen mit 1 bis etwa 6 Kohlenstoffatomen, eine niedrige Alkoxygruppe mit 1 bis etwa 6 Kohlenstoffatomen, eine substituierte oder unsubstituierte Vinylgruppe, eine substituierte oder unsubstituierte Allylgruppe, eine substituierte oder unsubstituierte niedrige Arylgruppe mit 6 bis etwa 10 Kohlenstoffatomen, eine Tri-(niedrige)-Alkyl- oder Di-(niedrige)-Alkylsilylgruppe oder eine Di-(niedrige)-Alkylaminogruppe sind und $R^5$ und $R^6$ gleich oder verschieden sein können, M ein Alkalimetall oder ein halbes Äquivalent eines Erdalkalimetalles ist und m eine ganze Zahl größer als 1 ist.

**13.** Verfahren nach Anspruch 12,
wobei Cyclo-$[R^5R^6SiNH]m$ entweder Cyclo-$[(CH_3)_2SiNH]m$ oder Cyclo-$[(CH_3)(CH_2=CH)SiN)m$ ist.

**14.** Verfahren nach Anspruch 1,
wobei das Silylamid ein Diorganocyclopolysilazan ist, das entweder teilweise oder vollständig ringgeöffnet ist.

**15.** Verfahren nach Anspruch 14,
wobei das Diorganocyclopolysilazan Einheiten mit der Formel $[R^1R^{11}SiNH]m$ umfaßt, wobei $R^1$ eine niedrige Alkylgruppe mit 1 bis etwa 6 Kohlenstoffatomen, eine substituierte oder unsubstituierte niedrige Alkenylgruppe mit 2 bis etwa 6 Kohlenstoffatomen, eine substituierte oder unsubstituierte niedrige Arylgruppe mit 6 bis etwa 10 Kohlenstoffatomen, eine Tri-(niedrige)-Alkyl- oder Di-(niedrige)-Alkylsilylgruppe oder eine Di-(niedrige)-Alkylaminogruppe ist, $R^{11}$ wie $R^1$ definiert ist und entweder gleich oder verschieden sein kann und m eine ganze Zahl größer als 1 ist.

**16.** Verfahren nach Anspruch 1,
wobei das organische Metallamid ausgewählt ist aus Kaliumpiperidid, Kaliumethylamid, Kaliumdiisopropylamid, entsprechenden Lithium-, Natrium, Nisidium- oder Cäsiumderivaten oder polymeren sekundären Aminen, die teilweise durch eine starke Base deprotoniert sind und Metallamidfunktionen enthalten.

**17.** Verfahren nach einem der Ansprüche 1 bis 13,
wobei das Si-H enthaltende Organosiliziumpolymer entweder ein Organopolysilan der Formel $[(RSiH)x-(RS)y]n$ ist, wobei $x + y = 1$ ist, R eine niedrige Alkylgruppe mit 1 bis etwa 6 Kohlenstoffatomen, eine niedrige Alkenylgruppe mit 2 bis etwa 6 Kohlenstoffatomen, eine substituierte oder unsubstituierte niedrige Arylgruppe mit 6 bis etwa 10 Kohlenstoffatomen oder eine Tri-(niedrige)-Alkyl- oder Di-(niedrige)-Alkylsilylgruppe ist und n eine ganze Zahl größer als 1 ist, oder ein Polycarbosilan mit mehreren sich wiederholenden Einheiten der Formel $[R^aSi(H)-(CH_2)q]$, wobei $R^a$ H, eine niedrige Alkylgruppe mit 1 bis etwa 6 Kohlenstoffatomen, eine Cycloalkylgruppe mit 3 bis etwa 6 Kohlenstoffatomen, eine substituierte oder unsubstituierte niedrige Arylgruppe mit 6 bis etwa 10 Kohlenstoffatomen ist und q eine ganze Zahl mit dem Wert 1 oder größer.

**18.** Verfahren nach Anspruch 17,
wobei das Polycarbosilan wenigstens 25 Mol% an sich wiederholenden Einheiten der Formel $[R^aSi(H)-(CH_2)q]$ enthält.

**19.** Verfahren nach Anspruch 17,
wobei R und $R^a$ eine niedrige Alkylgruppe sind.

**20.** Verfahren nach Anspruch 19,
wobei R und $R^a$ $CH_3$ sind.

**21.** Verfahren nach Anspruch 17,
wobei das Si-H enthaltende Organosiliziumpolymer ein Organopolysilan ist und $x = 1$, $y = 0$ ist.

**22.** Verfahren nach Anspruch 17 soweit von Anspruch 1 abhängig,
wobei das Si-H enthaltende Organosiliziumpolymer ein Polycarbosilan ist und das Gewichtsverhältnis von Polycarbosilan:Silylamid etwa 10:1 oder weniger beträgt.

**23.** Verfahren nach Anspruch 17 soweit von Anspruch 4 abhängig,.
wobei das Si-H enthaltende Organosiliziumpolymer eine Mischung des Polycarbosilans und des Organopolysilans ist und eine ausreichende Menge des Organopolysilans zugefügt ist, so daß das aus der Pyrolyse des Organopolysilans erhaltene überschüssige Silizium mit dem überschüssigen Kohlenstoff aus der Pyrolyse des Polycarbosilans und des Silylamids reagieren kann, wodurch die Menge an freiem Kohlenstoff reduziert wird.

**24.** Verfahren nach Anspruch 17 soweit von Anspruch 2 abhängig,
wobei das Si-H enthaltende Organosiliziumpolymer Organopolysilan ist und Organopolysilan in ausreichender Menge zugegeben wird, so daß der aus der Pyrolyse des Silylamids erhaltene überschüssige Kohlenstoff mit dem überschüssigen Silizium aus der Pyrolyse der Organopolysilanverbindung reagieren kann, um somit ein keramisches Produkt herzustellen, das im wesentlichen kein freies Silizium und keinen freien Kohlenstoff enthält.

**25.** Verfahren nach Anspruch 17 soweit von Anspruch 2 abhängig,
wobei das Molverhältnis von Organopolysilan zu dem in situ erzeugten Silylamid im Bereich von etwa 4:1 bis 1:4 liegt.

**26.** Verfahren nach Anspruch 17 soweit von Anspruch 2 abhängig,
wobei das Si-H enthaltende Organosiliziumpolymer eine Mischung des Polycarbosilans und des Organopolysilans ist und eine ausreichende Menge des Organopolysilans zugefügt ist, so daß das aus der Pyrolyse des Organopolysilans erhaltene überschüssige Silizium mit dem überschüssigen Kohlenstoff aus der Pyrolyse des Polycarbosilans und des in situ erzeugten Silylamids reagieren kann, wodurch die Menge an freiem Kohlenstoff reduziert wird.

**27.** Verfahren nach Anspruch 17 soweit von Anspruch 2 oder Anspruch 6 abhängig,
wobei man das Gemisch unter Rühren bei Raumtemperatur reagieren läßt und es anschließend auf Rückflußtemperatur erwärmt wird.

**28.** Verfahren nach Anspruch 17 soweit von Anspruch 2 oder Anspruch 6 abhängig,
wobei das präkeramische Polymer unter einer inerten Atmosphäre pyrolisiert wird, um keramisches Material zu bilden.

**Revendications**

**1.** Procédé de production de polymères précéramiques de composés organiques de silicium, procédé qui consiste :
(a) à mélanger un polymère de composés organiques de silicium contenant des motifs Si-H avec au moins une quantité catalytique d'un amidure organique de métal ou d'un silylamidure dans un solvant organique ;
(b) à laisser le mélange de l'étape (a) réagir à la température ambiante ou au-dessus de cette température ; et
(c) à désactiver le mélange réactionnel avec un électrophile réactif de manière à former ainsi ledit polymère précéramique de composé organique de silicium.

**2.** Procédé de production d'un polymère précéramique d'un composé organique de silicium, procédé qui consiste :
(a) à engendrer un polysilylamidure en présence d'un polymère de composé organique de silicium contenant des motifs Si-H par réaction du produit d'ammonolyse d'un composé $R^1SiHX_2$ (dans lequel $R^1$ est un groupe alkyle inférieur ayant 1 à environ 6 atomes de carbone, un groupe alcényle substitué ou non substitué ayant 2 à environ 6 atomes de carbone, un groupe aryle inférieur substitué ou non substitué ayant 6 à environ 10 atomes de carbone, un groupe tri(alkyle inférieur)- ou di(alkyle inférieur)-silyle ou un groupe di(alkyle inférieur)-amino et X est un halogène) en présence d'un catalyseur basique capable de déprotoner l'hydrogène d'un atome d'azote adjacent à

un atome de silicium pour engendrer le polysilylamidure in situ ;
(b) à laisser réagir le polysilylamidure engendré in situ et le polymère de composés organiques de silicium contenant des motifs Si-H l'un avec l'autre pendant une durée suffisante à la température ambiante ; et
(c) à désactiver le mélange avec un halogénure organique ou un halogénosilane pour produire le polymère précéramique de composé organique de silicium.

**3.** Procédé suivant la revendication 1, dans lequel le silylamidure est un silylamidure de métal alcalin ou alcalino-terreux.

**4.** Procédé suivant la revendication 3, dans lequel le silylamidure métallique est un silylamidure métallique polymérique de formule $[(R^1SiHNH)_a(R^1SiN)_b(R^1SiHNM)_c]_m$ où la somme a + b + c = 1, $R^1$ est un groupe alkyle inférieur ayant 1 à environ 6 atomes de carbone, un groupe cycloalkyle substitué ou non substitué ayant 3 à environ 6 atomes de carbone, un groupe alcényle substitué ou non substitué ayant 2 à environ 6 atomes de carbone, un groupe aryle inférieur substitué ou non substitué ayant 6 à environ 10 atomes de carbone, un groupe tri(alkyle inférieur)- ou di(alkyle inférieur)-silyle ou un groupe di(alkyle inférieur)-amino ; M est un métal alcalin ou un demi-équivalent d'un métal alcalino-terreux ; et m est un nombre entier supérieur à 1.

**5.** Procédé suivant la revendication 4, dans lequel le mélange réactionnel est désactivé avec un électrophile, E-X, E étant choisi parmi des groupes alkyle ayant 1 à 6 atomes de carbone et des groupe silyle et X étant choisi entre halogène, sulfate et sulfonate.

**6.** Procédé suivant la revendication 4, dans lequel le polymère de composé organique de silicium contenant des motifs Si-H est un organopolysilane et le silylamidure métallique polymérique est ajouté en une quantité suffisante pour que le carbone en excès obtenu par pyrolyse du silylamidure puisse réagir avec du silicium en excès provenant de la pyrolyse de l'organopolysilane en formant ainsi un produit céramique qui ne contient principalement pas de silicium libre ou de carbone libre.

**7.** Procédé suivant la revendication 4, dans lequel $R^1$ est un groupe alkyle inférieur.

**8.** Procédé suivant la revendication 7, dans lequel le silylamidure métallique polymérique répond à la formule $[(CH_3SiHNH)_a\ (CH_3SiN)_b\text{-}(CH_3SiHNK)_c]_m$.

**9.** Procédé suivant la revendication 6, dans lequel le rapport molaire de l'organopolysilane au silylamidure métallique polymérique va d'environ 4:1 à environ 1:4.

**10.** Procédé suivant la revendication 3, dans lequel le silylamidure métallique répond à la formule $[R^2R^3R^4Si]_2NM$ dans laquelle $R^2$, $R^3$ et $R^4$ représentent chacun un groupe alkyle inférieur ayant 1 à environ 6 atomes de carbone, un groupe alkoxy inférieur ayant 1 à environ 6 atomes de carbone, un groupe vinyle substitué ou non substitué, un groupe allyle substitué ou non substitué, un groupe aryle inférieur substitué ou non substitué ayant 6 à environ 10 atomes de carbone, un groupe tri(alkyle inférieur)- ou di(alkyle inférieur)-silyle ou un groupe di(alkyle inférieur)-amino, $R^2$, $R^3$ et $R^4$ peuvent être identiques ou différents ; et M est un métal alcalin ou un demi-équivalent d'un métal alcalino-terreux.

**11.** Procédé suivant la revendication 10, dans lequel $[R^2R^3R^4Si]_2NM$ est choisi entre $[(CH_3)_2(CH_2=CH)Si]_2NM$ et $[(CH_3)_3Si]_2NM$.

**12.** Procédé suivant la revendication 3, dans lequel le silylamidure métallique est un cyclo-$[R^5R^6SiNH]_m$ partiellement déprotoné contenant des motifs $[R^5R^6SiNM]$ dans lesquels $R^5$ et $R^6$ représentent chacun un groupe alkyle inférieur ayant 1 à environ 6 atomes de carbone, un groupe alkoxy inférieur ayant 1 à environ 6 atomes de carbone, un groupe vinyle substitué ou non substitué, un groupe allyle substitué ou non substitué, un groupe aryle inférieur substitué ou non substitué ayant 6 à environ 10 atomes de carbone, un groupe tri(alkyle inférieur)- ou di(alkyle inférieur)-silyle ou un groupe di(alkyle inférieur)-amino, $R^5$ et $R^6$ peuvent être identiques ou différents ; M est un métal alcalin ou un demi-équivalent d'un métal alcalino-terreux et m est un nombre entier supérieur à 1.

**13.** Procédé suivant la revendication 12, dans lequel le cyclo-$[R^5R^6SiNH]_m$ est un cyclo-$[(CH_3)_2SiNH]_m$ ou

un cyclo-$[(CH_3)(CH_2=CH)SiN]_m$.

**14.** Procédé suivant la revendication 1, dans lequel le silylamidure est un diorganocyclopolysilazane qui est partiellement ou entièrement décyclisé.

**15.** Procédé suivant la revendication 14, dans lequel le diorganocyclopolysilazane comprend des motifs répondant à la formule $[R^1R^{11}SiNH]_m$ dans laquelle $R^1$ est un groupe alkyle inférieur ayant 1 à environ 6 atomes de carbone, un groupe alcényle substitué ou non substitué ayant 2 à environ 6 atomes de carbone, un groupe aryle inférieur substitué ou non substitué ayant 6 à environ 10 atomes de carbone, un groupe tri(alkyle inférieur)- ou di(alkyle inférieur)-silyle ou un groupe di(alkyle inférieur)-amino ; $R^{11}$ a la même définition que $R^1$ et peut y être identique ou en être différent et m est un nombre entier supérieur à 1.

**16.** Procédé suivant la revendication 1, dans lequel l'amidure métallique organique est choisi entre le pipéridure de potassium, l'éthylamidure de potassium, le diisopropylamidure de potassium, les dérivés correspondants de lithium, sodium, rubidium ou césium ou des amines secondaires polymériques partiellement déprotonées par une base forte et contenant des fonctions amidure métallique.

**17.** Procédé suivant l'une quelconque des revendications 1 à 13, dans lequel le polymère de composé organique de silicium contenant des motifs Si-H est un organopolysilane de formule $[(RSiH)_x(RSi)_y]_n$ où $x + y$ a la valeur 1, R est un groupe alkyle inférieur ayant 1 à environ 6 atomes de carbone, un groupe alcényle inférieur ayant 2 à environ 6 atomes de carbone, un groupe aryle inférieur substitué ou non substitué ayant 6 à environ 10 atomes de carbone ou un groupe tri(alkyle inférieur)- ou di(alkyle inférieur)-silyle et n est un nombre entier supérieur à 1 ; ou polycarbosilane ayant une pluralité de motifs répétés de formule $[R^aSi(H)-(CH_2)_q]$ où $R^a$ représente H, un groupe alkyle inférieur ayant 1 à environ 6 atomes de carbone, un groupe cycloalkyle ayant 3 à environ 6 atomes de carbone, un groupe aryle inférieur substitué ou non substitué ayant 6 à environ 10 atomes de carbone et q est un nombre entier égal ou supérieur à 1.

**18.** Procédé suivant la revendication 17, dans lequel le polycarbosilane contient au moins environ 25 moles % de motifs répétés de formule $[R^aSi(H)-(CH_2)_q]$.

**19.** Procédé suivant la revendication 17, dans lequel R et $R^a$ représentent un groupe alkyle inférieur.

**20.** Procédé suivant la revendication 19, dans lequel R et $R^a$ sont des groupes $CH_3$.

**21.** Procédé suivant la revendication 17, dans lequel le polymère de composé organique de silicium contenant des motifs Si-H est un organopolysilane, x est égal à 1 et y est égal à 0.

**22.** Procédé suivant la revendication 17 subordonnée à la revendication 1, dans lequel le polymère de composé organique de silicium contenant des motifs Si-H est un polycarbosilane et le rapport en poids de polycarbosilane au silylamidure est égal ou inférieur à environ 10:1.

**23.** Procédé suivant la revendication 17 subordonnée à la revendication 4, dans lequel le polymère de composé organique de silicium contenant des motifs Si-H est un mélange du polycarbosilane et de l'organopolysilane avec addition d'une quantité suffisante d'organopolysilane pour que le silicium en excès obtenu par pyrolyse de l'organopolysilane puisse réagir avec le carbone en excès venant de la pyrolyse du polycarbosilane et du silylamidure, en réduisant ainsi la quantité de carbone libre.

**24.** Procédé suivant la revendication 17 subordonnée à la revendication 2, dans lequel le polymère de composé organique de silicium contenant des motifs Si-H est un organopolysilane et l'organopolysilane est ajouté en une quantité suffisante pour que le carbone en excès obtenu par pyrolyse du silylamidure puisse réagir avec du silicium en excès venant de la pyrolyse de l'organopolysilane, en formant ainsi un produit céramique qui ne contient principalement pas de silicium libre ou de carbone libre.

**25.** Procédé suivant la revendication 17 subordonnée à la revendication 2, dans lequel le rapport molaire de l'organopolysilane au silylamidure engendré in situ va d'environ 4:1 à environ 1:4.

**26.** Procédé suivant la revendication 17 subordonnée à la revendication 2, dans lequel le polymère de composé organique de silicium contenant des motifs Si-H est un mélange du polycarbosilane et de l'organopolysilane avec addition d'une quantité suffisante de l'organopolysilane pour que le silicium en excès obtenu par pyrolyse de l'organopolysilane puisse réagir avec le carbone en excès venant de la pyrolyse du polycarbosilane et du silylamidure engendré in situ, en réduisant ainsi la quantité de carbone libre.

**27.** Procédé suivant la revendication 17 subordonnée à la revendication 2 ou à la revendication 6, dans lequel on laisse réagir le mélange sous agitation à la température ambiante en le chauffant ensuite au reflux.

**28.** Procédé suivant la revendication 17 subordonnée à la revendication 2 ou à la revendication 6, dans lequel le polymère précéramique est pyrolysé en atmosphère inerte pour former une matière céramique.

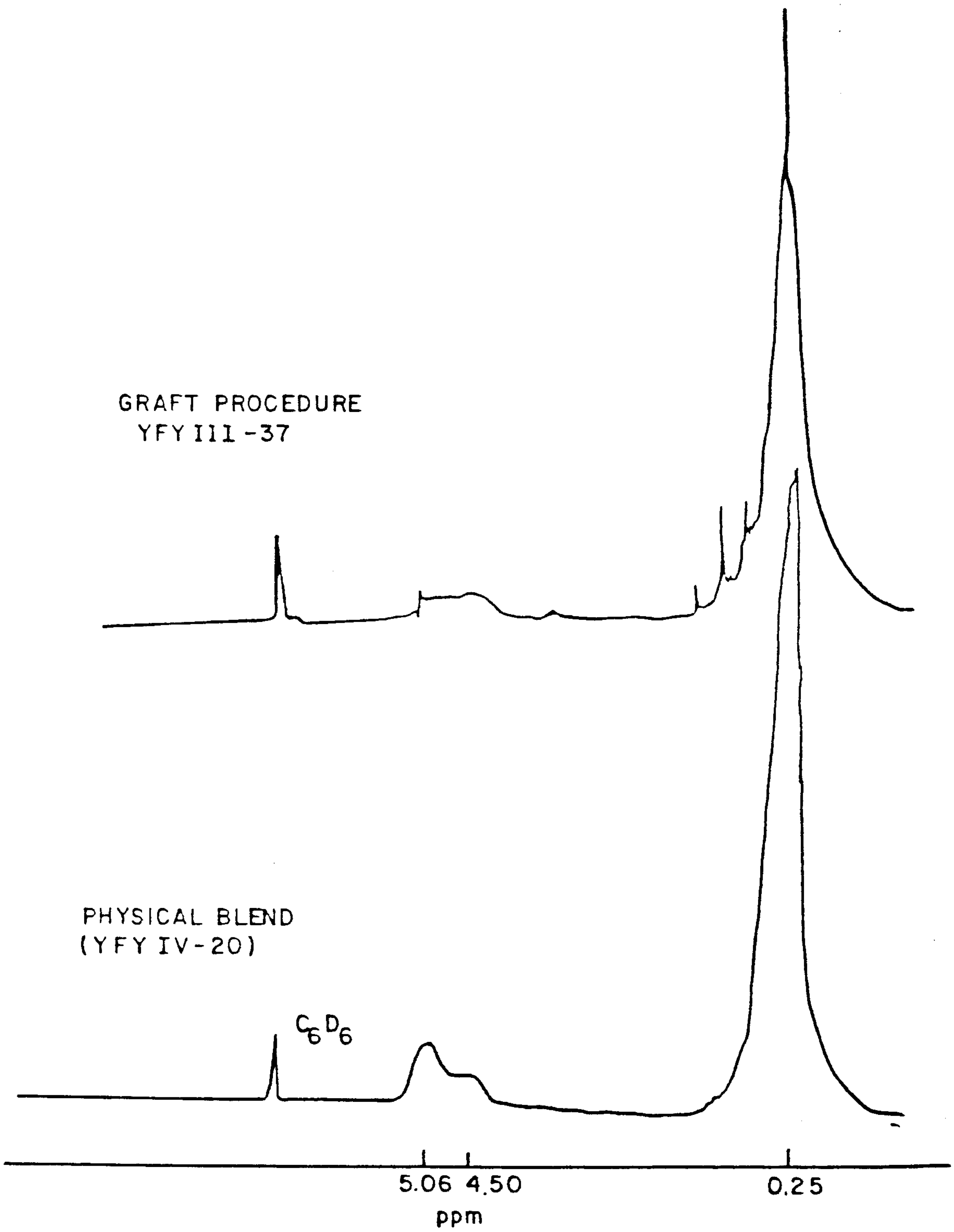
GRAFT PROCEDURE
YFY III-37
PHYSICAL BLEND
(YFY IV-20)
$C_6D_6$
5.06
4.50
0.25
ppm

FIGURE 1

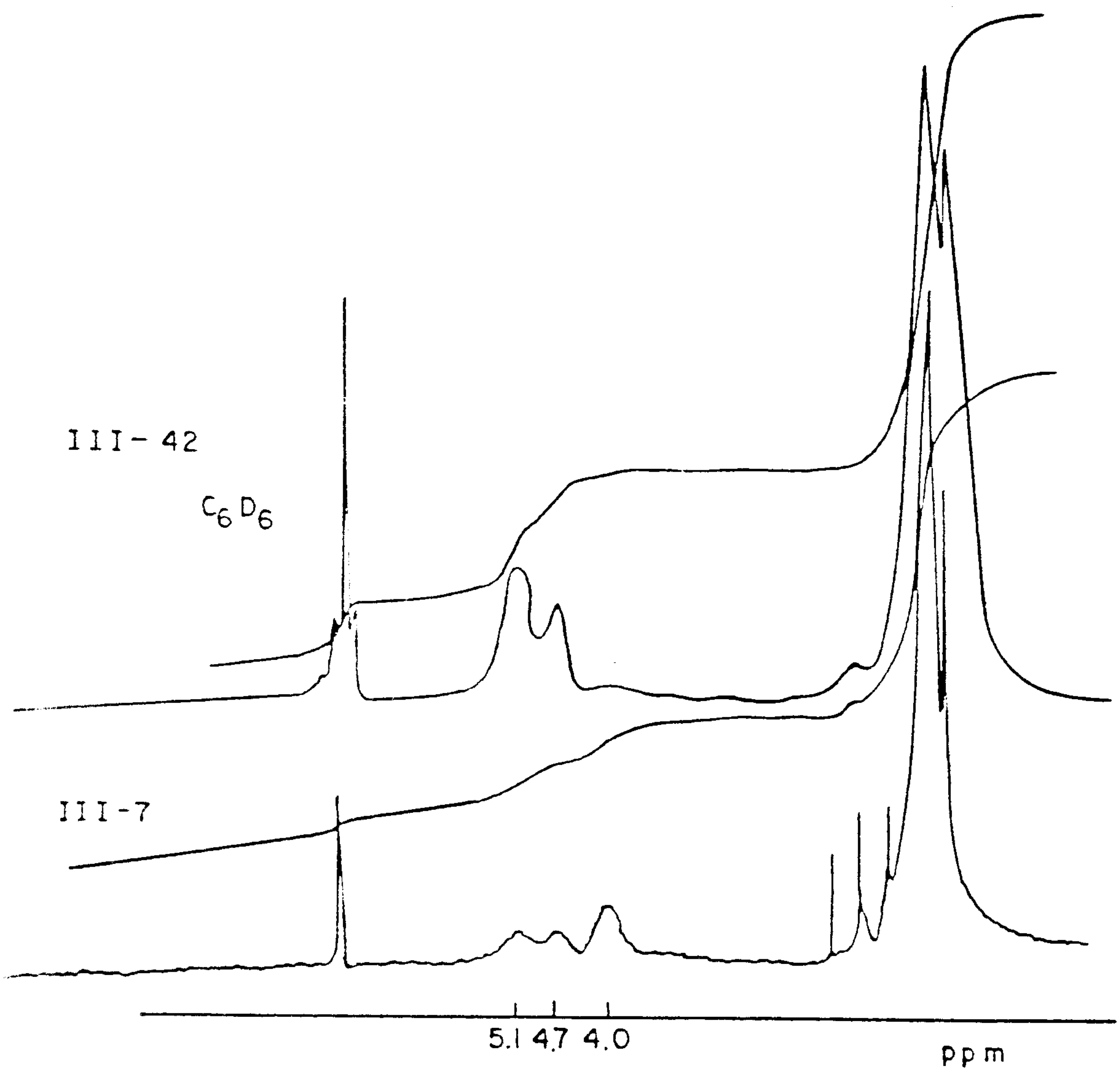


FIGURE 2

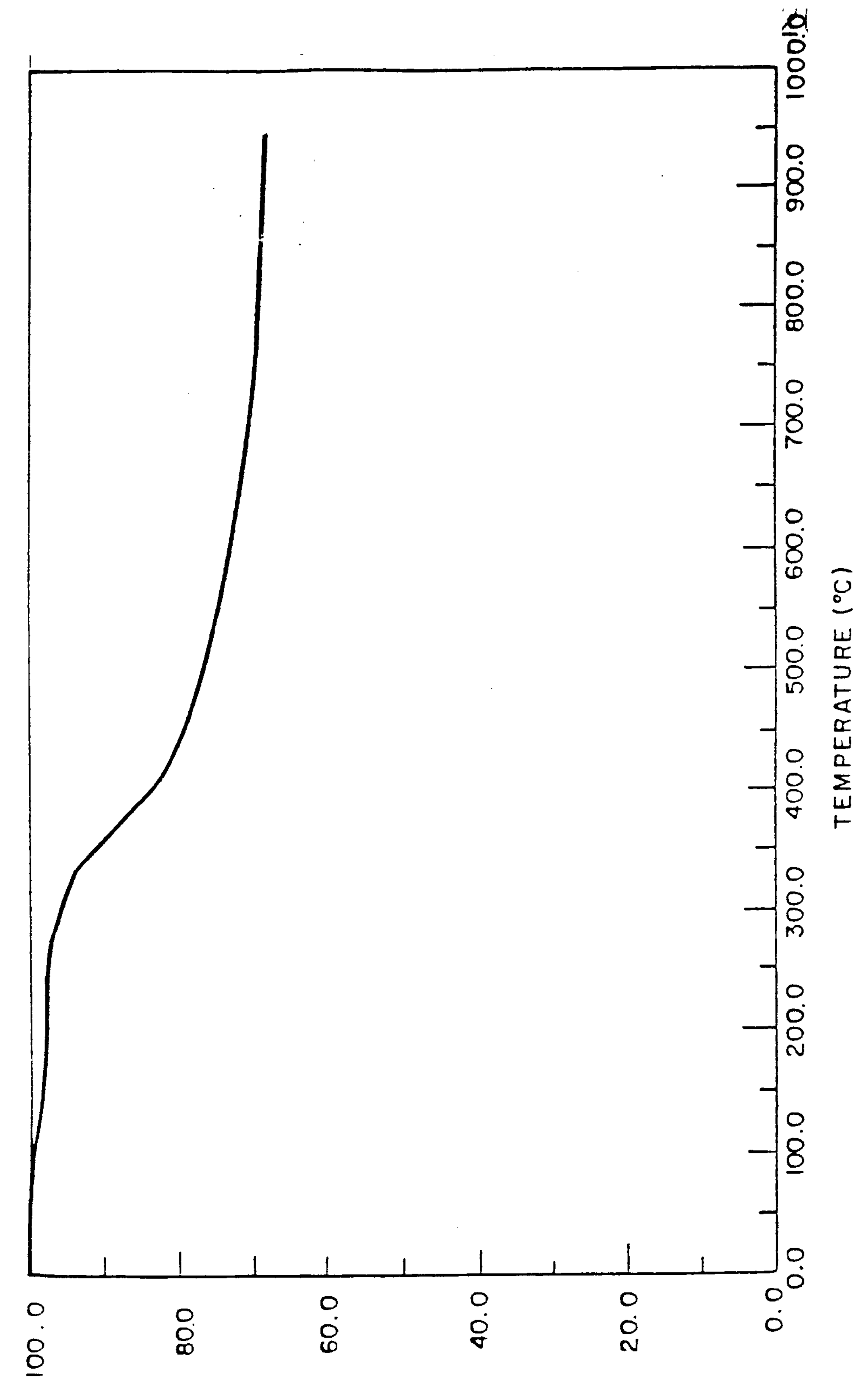
100.0
80.0
60.0
40.0
20.0
0.0
0.0
100.0
200.0
300.0
400.0
500.0
600.0
700.0
800.0
900.0
1000.0
TEMPERATURE (°C)
% WEIGHT

FIGURE 3

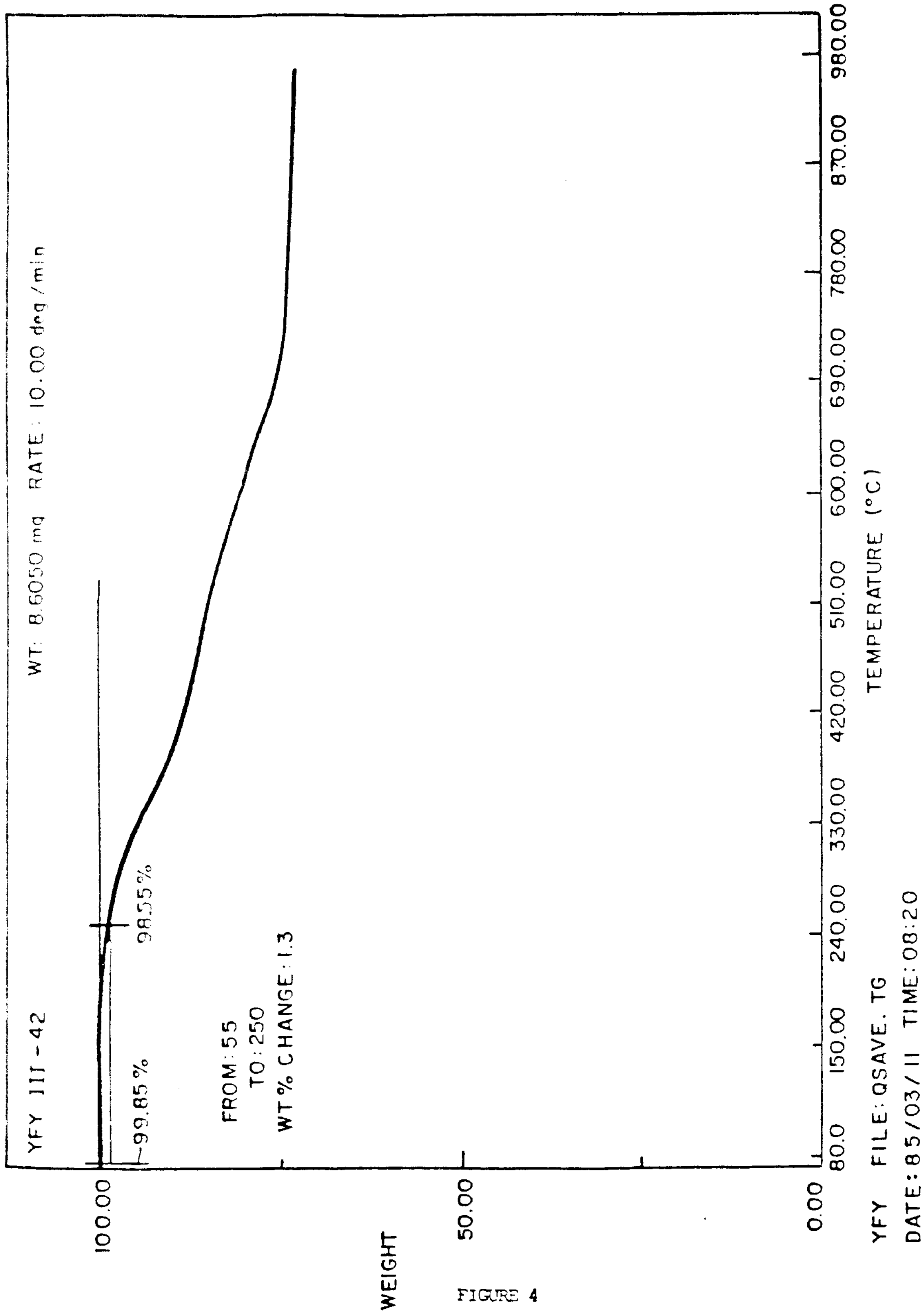
YFY JIT - 42
WT: 8.6050 mg RATE: 10.00 deg/min
99.85 %
98.55 %
FROM: 55
TO: 250
WT % CHANGE: 1.3
100.00
50.00
0.00
% WEIGHT
80.0
150.00
240.00
330.00
420.00
510.00
600.00
690.00
780.00
870.00
980.00
TEMPERATURE (°C)
YFY FILE: QSAVE. TG
DATE: 85/03/11 TIME: 08:20

FIGURE 4